# EUROPEAN PATENT APPLICATION

(11) **EP 3 369 621 A1**
(43) Date of publication of application: **05.09.2018**
(21) Application number: 16859861.3
(22) Date of filing: 26.10.2016
(51) Int. Cl.: B60Q 1/50

(54) **VEHICULAR ILLUMINATION DEVICE, VEHICLE SYSTEM, AND VEHICLE**

(30) Priority: 27.10.2015 JP 2015211214; 27.10.2015 JP 2015211215; 27.10.2015 JP 2015211216; 27.10.2015 JP 2015211217
(71) Applicant: Koito Manufacturing Co., Ltd., Tokyo 108-8711 (JP)
(72) Inventor: TATARA, Naoki, Shizuoka-shi Shizuoka 424-8764 (JP); OKAMURA, Toshihiro, Shizuoka-shi Shizuoka 424-8764 (JP); MASUDA, Takeshi, Shizuoka-shi Shizuoka 424-8764 (JP); TAKII, Naoki, Shizuoka-shi Shizuoka 424-8764 (JP)
(74) Representative: Grünecker Patent- und Rechtsanwälte PartG mbB
(86) International application number: PCT/JP2016/081783
(87) International publication number: WO 2017/073632

(57) **Abstract**

This illumination device (4) is configured so as to display, outside a vehicle (1) capable of traveling in an automatic driving mode, information indicating the driving mode of the vehicle (1), and is provided with: an illumination unit (42) configured so as to shine light outside the vehicle (1); and an illumination control unit (43) configured so as to set the illumination state of the illumination unit (42) in a prescribed illumination state in accordance with the driving mode of the vehicle (1).

## Description

### TECHNICAL FIELD

The present disclosure relates to a vehicular illumination device. In particular, the present disclosure relates to a vehicular illumination device provided in a vehicle capable of travelling in an automatic driving mode. Also, the present disclosure relates to a vehicle system including the vehicular illumination device, and a vehicle including the vehicle system.

### RELATED ART

Currently, research on an automatic driving technique of an automobile has been actively conducted in each country, and each country is considering the legislation so as to enable a vehicle (hereinafter, a "vehicle" refer to an automobile) to travel in an automatic driving mode on public roads. Here, in the automatic driving mode, a vehicle system automatically controls travelling of a vehicle. Specifically, in the automatic driving mode, the vehicle system performs at least one of a steering control (control a travelling direction of the vehicle), a brake control and an accelerator control (control of braking and acceleration/deceleration of the vehicle) based on various information obtained from a camera, a sensor, and a radar and the like. On the other hand, in a manual driving mode described later, a driver controls the travelling of the vehicle, as in most of conventional vehicles. Specifically, in the manual driving mode, the travelling of the vehicle is controlled in conformity with a driver's operation (a steering operation, a braking operation, and an accelerator operation), and the vehicle system does not automatically perform the steering control, the brake control and the accelerator control. Meanwhile, the driving mode of the vehicle is not a concept existing only in some vehicles but a concept existing in all vehicles including conventional vehicles having no automatic driving function. For example, the driving mode of the vehicle is classified in accordance with a vehicle control method or the like.

Thus, in the future, it is expected that vehicles travelling in the automatic driving mode and vehicles travelling in the manual driving mode coexist on public roads. On the road where the vehicles travelling in the automatic driving mode (hereinafter, appropriately referred to as "automatic driving vehicle") and the vehicles travelling in the manual driving mode (hereinafter, appropriately referred to as "manual driving vehicle") coexist, it is preferable that information, which indicates that a host vehicle is traveling in the automatic driving mode, is presented to other vehicles, pedestrians and the like.

For example, if a driver of the other vehicle travelling behind the host vehicle can perceive the driving mode of the host vehicle, it is thought that the driver will operate a steering wheel carefully or in relief when overtaking the host vehicle. Also, if a pedestrian trying to cross a crosswalk can perceive the driving mode of the host vehicle approaching the crosswalk, the pedestrian can safely cross the crosswalk. Like this, the driving mode of the host vehicle is the information important to the other vehicles, the pedestrians and the like.

Also, on the road where vehicles travelling in a full-automatic driving mode in a state where there is no passenger on a driver seat and the manual driving vehicles coexist, it is preferable that information, which indicates that the host vehicle is travelling in the full-automatic driving mode in the state where there is no passenger on the driver seat, is presented to the other vehicle, the pedestrian and the like, from a standpoint of safety. For example, if a driver of the other vehicle travelling behind the host vehicle can perceive that the host vehicle is travelling in the full-automatic driving mode in the state where there is no passenger on the driver seat, it is thought that the driver will operate a steering wheel carefully or in relief when overtaking the host vehicle. Also, if a pedestrian trying to cross a crosswalk can perceive that the host vehicle approaching the crosswalk is travelling in the full-automatic driving mode in the state where there is no passenger on the driver seat, it is thought that the pedestrian can safely cross the crosswalk. Like this, the information, which indicates that the host vehicle is travelling in the full-automatic driving mode in the state where there is no passenger on the driver seat, is the information important to the other vehicles, the pedestrians and the like.

Also, on the road where the vehicles travelling in the full-automatic driving mode and the manual driving vehicles coexist, it is preferable that information, which indicates whether a passenger is in the vehicle travelling in the full-automatic driving mode, is presented to the other vehicles, the pedestrians and the like. For example, if a driver of the other vehicle travelling behind the host vehicle can perceive that a passenger is in the host vehicle travelling in the full-automatic driving mode, it is thought that the driver will operate a steering wheel carefully or in relief when overtaking the host vehicle. Also, if a pedestrian trying to cross a crosswalk can perceive that a passenger is in the host vehicle approaching the crosswalk and travelling in the full-automatic driving mode, it is thought that the pedestrian can safely cross the crosswalk. Also, for example, if a driver of a vehicle travelling at night in a travel-allowed section in which only the automatic driving vehicle is allowed to travel can perceive that there is a passenger in a preceding vehicle or an oncoming vehicle (hereinafter, collectively referred to as "front vehicle") travelling in the full-automatic driving mode, the driver will hesitate to irradiate glare light such as a high beam toward the front vehicle. Therefore, it is possible to suppress the glare light from being irradiated to the front vehicle in advance by the information indicating that there is a passenger in the vehicle travelling in the full-automatic driving mode.

Also, on the road where the automatic driving vehicles and the manual driving vehicles coexist, it is preferable that information, which indicates that the host vehicle is a vehicle capable of travelling in the automatic driving mode, is presented to the other vehicles, the pedestrians and the like. For example, if a driver of the other vehicle travelling behind the host vehicle can perceive that the host vehicle is a vehicle capable of travelling in the automatic driving mode, it is thought that the driver will operate a steering wheel carefully or in relief when overtaking the host vehicle. Also, if a pedestrian trying to cross a crosswalk can perceive that the host vehicle approaching the crosswalk is a vehicle capable of travelling in the automatic driving mode, it is thought that the pedestrian can safely cross the crosswalk.

Patent Document 1 discloses an automatic follow-up travelling system in which a following vehicle can automatically follow a preceding vehicle. In the automatic follow-up travelling system, each of the preceding vehicle and the following vehicle has a display device, character information for preventing the other vehicle from intruding between the preceding vehicle and the following vehicle is displayed on the display device of the preceding vehicle, and character information indicative of the automatic follow-up travelling mode is displayed on the display device of the following vehicle.

### Citation List

### Patent Documents

Patent Document 1: JP-A-H09-277887

### SUMMARY OF THE INVENTION

### Problems To Be Solved by Invention

However, Patent Document 1 does not consider a system for displaying the information, which indicates the driving mode of each vehicle independently travelling, to the outside, and a system for displaying the information, which indicates that the vehicle is independently travelling in the full-automatic driving mode in the state where there is no passenger on the driver seat. Also, Patent Document 1 does not consider a system for displaying the information, which indicates that there is a passenger in the vehicle travelling in the full-automatic driving mode, and a system for displaying the information, which indicates that each vehicle independently travelling is a vehicle capable of travelling in the automatic driving mode, toward the outside.

A first object of the present disclosure is to provide a vehicular illumination device that can display information indicative of a driving mode of a host vehicle toward pedestrians, other vehicles and the like around the host vehicle.

A second object of the present disclosure is to provide a vehicular illumination device that can display information, which indicates that a host vehicle is travelling in a full-automatic driving mode in a state where in which there is no passenger on a driver seat, toward the pedestrians, the other vehicles and the like around the host vehicle.

A third object of the present disclosure is to provide a vehicular illumination device that can display information, which indicates that a host vehicle is travelling in a full-automatic driving mode in a state where in which there is a passenger on a driver seat, toward the pedestrians, the other vehicles and the like around the host vehicle.

A fourth object of the present disclosure is to provide a vehicular display device that can display information, which indicates that a host vehicle is a vehicle capable of travelling in an automatic driving mode, toward the pedestrians, the other vehicles and the like around the host vehicle.

### Means for Solving the Problems

A vehicular illumination device relating to a first aspect of the present disclosure is a vehicular illumination device configured to display information indicative of a driving mode of a vehicle toward an outside of the vehicle capable of travelling in an automatic driving mode. The vehicular illumination device includes an illumination unit configured to irradiate light toward the outside of the vehicle, and an illumination control unit configured to set an illumination state of the illumination unit to a predetermined illumination state in accordance with the driving mode of the vehicle.

According to the above configuration, it is possible to provide the vehicular illumination device that can display the information indicative of a driving mode of a host vehicle toward pedestrians, other vehicles and the like around the host vehicle.

Also, the illumination control unit may turn on or off the illumination unit when the driving mode of the vehicle is a predetermined driving mode.

According to the above configuration, the pedestrians, the other vehicles and the like around the host vehicle can visually recognize that the driving mode of the host vehicle is the predetermined driving mode.

Also, the illumination control unit may turn on or off the illumination unit when the driving mode of the vehicle is a full-automatic driving mode.

According to the above configuration, the pedestrians, the other vehicles and the like around the host vehicle can visually recognize that the driving mode of the host vehicle is the full-automatic driving mode.

Also, the illumination control unit may turn on or off the illumination unit when the driving mode of the vehicle is a full-automatic driving mode or an advanced driving support mode.

According to the above configuration, the pedestrians, the other vehicles and the like around the host vehicle can visually recognize that the driving mode of the host vehicle is the full-automatic driving mode or the advanced driving support mode.

Also, the illumination control unit may turn on or off the illumination unit when the driving mode of the vehicle is a full-automatic driving mode, an advanced driving support mode or a driving support mode.

According to the above configuration, the pedestrians, the other vehicles and the like around the host vehicle can visually recognize that the driving mode of the host vehicle is the full-automatic driving mode, the advanced driving support mode or the driving support mode. In other words, the other vehicles and the like can visually recognize that the driving mode of the host vehicle is an automatic driving mode.

Also, the illumination control unit may set the illumination state of the illumination unit to a first illumination state when the driving mode of the vehicle is a full-automatic driving mode,
the illumination control unit may set the illumination state of the illumination unit to a second illumination state when the driving mode of the vehicle is an advanced driving support mode,
the illumination control unit may set the illumination state of the illumination unit to a third illumination state when the driving mode of the vehicle is a driving support mode, and
the illumination control unit may set the illumination state of the illumination unit to a fourth illumination state when the driving mode of the vehicle is a manual driving mode.

According to the above configuration, the pedestrians, the other vehicles and the like around the host vehicle can visually recognize whether the driving mode of the host vehicle is the full-automatic driving mode, the advanced driving support mode, the driving support mode or the manual driving mode.

Also, the illumination control unit may be configured to change an illumination color, a luminescence intensity, a light emitting area or a blinking cycle of the illumination unit in accordance with the driving mode of the vehicle.

According to the above configuration, the pedestrians, the other vehicles and the like around the host vehicle can visually recognize the information indicative of the driving mode of the host vehicle by the illumination color, luminescence intensity, light emitting area or blinking cycle of the illumination unit.

Also, a vehicle system may be provided which includes the vehicular illumination device and a vehicle control unit configured to transmit a mode signal indicative of the driving mode of the vehicle to the vehicular illumination device and to control traveling of the vehicle.

According to the above configuration, it is possible to provide the vehicle system that can display the information indicative of the driving mode of the host vehicle toward the pedestrians, the other vehicles and the like around the host vehicle.

A vehicular illumination device relating to a second aspect of the present disclosure is configured to display information, which indicates that a vehicle is travelling in a full-automatic driving mode in a state where there is no passenger on a driver seat of the vehicle, toward an outside of the vehicle capable of travelling in the full-automatic driving mode.

The vehicular illumination device includes:
an illumination unit configured to irradiate light to an outside of the vehicle, and
an illumination control unit configured to set an illumination state of the illumination unit to a predetermined illumination state when a driving mode of the vehicle is the full-automatic driving mode and there is no passenger on the driver seat of the vehicle.

According to the above configuration, it is possible to provide the vehicular illumination device capable of displaying the information, which indicates that a host vehicle is travelling in the full-automatic driving mode in the state where there is no passenger on the driver seat, toward the pedestrians, the other vehicles and the like around the host vehicle.

Also, the illumination control unit may turn on or off the illumination unit when the driving mode of the vehicle is the full-automatic driving mode and there is no passenger on the driver seat of the vehicle.

According to the above configuration, the pedestrians, the other vehicles and the like around the host vehicle can visually recognize that the host vehicle is travelling in the full-automatic driving mode in the state where there is no passenger on the driver seat by the lighting or lights-out of the illumination unit.

Also, a vehicle system may be provided which includes the vehicular illumination device and a vehicle control unit, which transmits a predetermined illumination control signal to the vehicular illumination device when a driving mode of the vehicle is the full-automatic driving mode and there is no passenger on the driver seat of the vehicle. The illumination control unit may be configured to set the illumination state of the illumination unit to the predetermined illumination state on the basis of the predetermined illumination control signal.

According to the above configuration, it is possible to provide the vehicle system capable of displaying the information, which indicates that the host vehicle is travelling in the full-automatic driving mode in the state where there is no passenger on the driver seat, toward the pedestrians, the other vehicles and the like around the host vehicle.

A vehicular illumination device relating to a third aspect of the present invention is configured to display information, which indicates that a vehicle is travelling in a full-automatic driving mode in a state where there is a passenger in the vehicle, toward an outside of the vehicle capable of travelling in the full-automatic driving mode.

The vehicular illumination device includes:
an illumination unit configured to irradiate light to an outside of the vehicle, and
an illumination control unit configured to set an illumination state of the illumination unit to a predetermined illumination state when a driving mode of the vehicle is the full-automatic driving mode and there is a passenger in the vehicle.

According to the above configuration, it is possible to provide the vehicular illumination device capable of displaying the information, which indicates that a host vehicle is travelling in the full-automatic driving mode in the state where there is a passenger in the host vehicle, toward the pedestrians, the other vehicles and the like around the host vehicle.

Also, the illumination control unit may turn on or off the illumination unit when the driving mode of the vehicle is the full-automatic driving mode and there is a passenger in the vehicle.

According to the above configuration, the pedestrians, the other vehicles and the like around the host vehicle can visually recognize that the host vehicle is travelling in the full-automatic driving mode in the state where there is a passenger on the driver seat by the lighting or lights-out of the illumination unit.

Also, a vehicle system may be provided which includes the vehicular illumination device and a vehicle control unit, which transmits a predetermined illumination control signal to the vehicular illumination device when a driving mode of the vehicle is the full-automatic driving mode and there is a passenger in the vehicle. The illumination control unit may be configured to set the illumination state of the illumination unit to the predetermined illumination state on the basis of the predetermined illumination control signal.

According to the above configuration, it is possible to provide the vehicle system capable of displaying the information, which indicates that the host vehicle is travelling in the full-automatic driving mode in the state where there is a passenger in the host vehicle, toward the pedestrians, the other vehicles and the like around the host vehicle.

A vehicular display device relating to a fourth aspect of the present invention is configured to display information, which indicates that a vehicle is a vehicle capable of travelling in an automatic driving mode, toward an outside of the vehicle.

According to the above configuration, it is possible to provide the vehicular display device capable of displaying the information, which indicates that a host vehicle is a vehicle capable of travelling in the automatic driving mode, toward the pedestrians, the other vehicles and the like around the host vehicle.

Also, the vehicular display device may include an emblem attached to a vehicle body of the vehicle.

According to the above configuration, the pedestrians, the other vehicles and the like around the host vehicle can perceive that the host vehicle is a vehicle capable of travelling in the automatic driving mode by seeing the emblem attached to the vehicle body.

Also, the vehicular display device may include an illumination unit configured to irradiate light toward an outside of the vehicle.

According to the above configuration, the pedestrians, the other vehicles and the like around the host vehicle can perceive that the host vehicle is a vehicle capable of travelling in the automatic driving mode by seeing the illumination unit.

Also, the emblem may include a light emitting element. Also, the vehicular display device may further include an illumination control unit configured to set a light emitting state of the light emitting element to a predetermined light emitting state when a driving mode of the vehicle is the automatic driving mode.

According to the above configuration, the pedestrians, the other vehicles and the like around the host vehicle can perceive that the driving mode of the host vehicle is the automatic driving mode by seeing the illumination state of the light emitting element provided in the emblem.

Also, the vehicular display device may further include an illumination control unit configured to set an illumination state of the illumination unit to a predetermined illumination state when a driving mode of the vehicle is the automatic driving mode.

According to the above configuration, the pedestrians, the other vehicles and the like around the host vehicle can perceive that the driving mode of the host vehicle is the automatic driving mode by seeing the illumination state of the illumination unit.

Also, the illumination control unit may turn on or off the light emitting element when the driving mode of the vehicle is the automatic driving mode. Also, the illumination control unit may turn on or off the illumination unit when the driving mode of the vehicle is the automatic driving mode.

According to the above configuration, the pedestrians, the other vehicles and the like around the host vehicle can perceive that the driving mode of the host vehicle is the automatic driving mode by seeing the lighting or lights-out of the illumination unit.

Also, a vehicle including the vehicle system and capable of travelling in an automatic driving mode may be provided.

### Effects of Invention

According to the first aspect of the present disclosure, it is possible to provide the vehicular illumination device that can display the information indicative of the driving mode of the host vehicle toward the pedestrians, the other vehicles and the like around the host vehicle.

According to the second aspect of the present disclosure, it is possible to provide the vehicular illumination device that can display the information, which indicates that the host vehicle is travelling in the full-automatic driving mode in the state where there is no passenger on the driver seat, toward the pedestrians, the other vehicles and the like around the host vehicle.

According to the third aspect of the present disclosure, it is possible to provide the vehicular illumination device that can display the information, which indicates that the host vehicle is travelling in the full-automatic driving mode in the state where there is a passenger on the driver seat in the host vehicle, toward the pedestrians, the other vehicles and the like around the host vehicle.

According to the fourth aspect of the present disclosure, it is possible to provide the vehicular display device that can display the information, which indicates that the host vehicle is a vehicle capable of travelling in the automatic driving mode, toward the pedestrians, the other vehicles and the like around the host vehicle.

### BRIEF DESCRIPTION OF THE DRAWINGS

FIG. 1A is a top view of a vehicle in which a vehicular illumination device relating to a first illustrative embodiment of the present invention (hereinafter, simply referred to as "first illustrative embodiment") is mounted, and FIG. 1B is a side view of the vehicle shown in FIG. 1A.
FIG. 2 is a block diagram of a vehicle system including the vehicular illumination device of the first illustrative embodiment.
FIG. 3 is a flowchart depicting processing of changing an illumination state of an illumination unit in accordance with a driving mode of the vehicle.
FIG. 4 depicts an example of the illumination unit.
FIG. 5A is a top view of the vehicle in which a vehicular illumination device relating to a second illustrative embodiment of the present invention (hereinafter, simply referred to as "second illustrative embodiment") is mounted, and FIG. 5B is a side view of the vehicle shown in FIG. 5A.
FIG. 6 is a block diagram of the vehicle system including the vehicular illumination device of the second illustrative embodiment.
FIG. 7 is a flowchart depicting processing of turning on the illumination unit.
FIG. 8A is a flowchart depicting processing of turning on the illumination unit when a calling signal is received from a mobile device, and FIG. 8B is a flowchart depicting processing of turning on the illumination unit when an automatic parking instruction signal is received form the mobile device.
FIG. 9A is a top view of the vehicle in which a vehicular illumination device relating to a third illustrative embodiment of the present invention (hereinafter, simply referred to as "third illustrative embodiment") is mounted, and FIG. 9B is a side view of the vehicle shown in FIG. 9A.
FIG. 10 is a block diagram of the vehicle system including the vehicular illumination device of the third illustrative embodiment.
FIG. 11 is a flowchart depicting process of turning on the illumination unit.
FIG. 12 is a flowchart depicting process of turning on the illumination unit when a surrounding environment of the vehicle becomes dark.
FIG. 13A is a front view of the vehicle in which a vehicular illumination device relating to a fourth illustrative embodiment of the present invention (hereinafter, simply referred to as "fourth illustrative embodiment") is mounted, and FIG. 13B is a rear view of the vehicle shown in FIG. 13A.
FIG. 14 is a block diagram of the vehicle system including the vehicular display device of the fourth illustrative embodiment.
FIG. 15 is a flowchart depicting processing of turning on and off light emitting elements in accordance with the driving mode of the vehicle.
FIG. 16A is a top view of the vehicle in which a vehicular illumination device relating to a fifth illustrative embodiment of the present invention (hereinafter, simply referred to as "fifth illustrative embodiment") is mounted, and FIG. 16B is a left side view of the vehicle shown in FIG. 16A.
FIG. 17 is a block diagram of the vehicle system including the vehicular display device of the fifth illustrative embodiment.
FIG. 18 is a flowchart depicting processing of turning on and off an illumination unit in accordance with the driving mode of the vehicle.
FIG. 19A is a front view of the vehicle in which an illumination unit relating to a first modified embodiment is mounted, and FIG. 19B is a rear view of the vehicle shown in FIG. 19A.
FIG. 20A is a left side view of the vehicle in which an illumination unit relating to a second modified embodiment is mounted, FIG. 20B is a front view of the vehicle shown in FIG. 20A, FIG. 20C is a right side view of the vehicle shown in FIG. 20A, and FIG. 20D is a rear view of the vehicle shown in FIG. 20A.
FIG. 21A is a left side view of the vehicle in which an illumination unit relating to a third modified embodiment is mounted, FIG. 21B is a front view of the vehicle shown in FIG. 21A, FIG. 21C is a right side view of the vehicle shown in FIG. 21A, and FIG. 21D is a rear view of the vehicle shown in FIG. 21A.

### DETAILED DESCRIPTION OF ILLUSTRATIVE EMBODIMENTS

### (First Illustrative Embodiment)

Hereinafter, a first illustrative embodiment will be described with reference to the drawings. Meanwhile, in the below, for the sake of convenience of description, the description of members having the same reference numerals as those already described in the description of the first illustrative embodiment will be omitted. Also, for the sake of convenience of description, dimensions of the respective members shown in the drawings may be different from actual dimensions of the respective members.

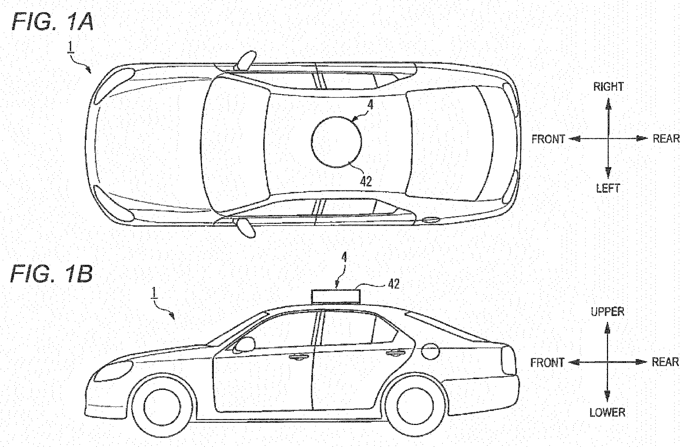

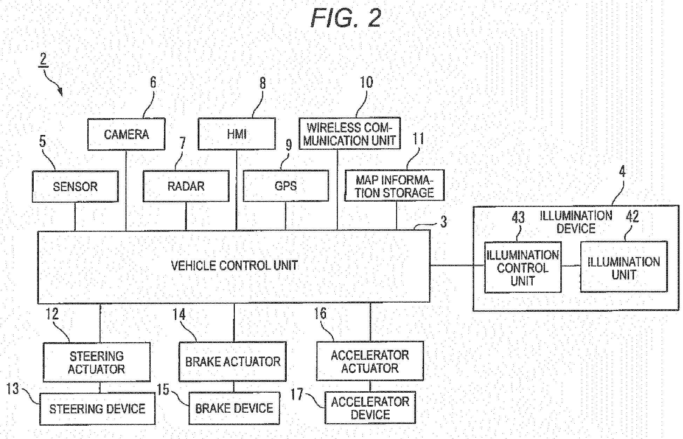

FIG. 1 shows a vehicle 1 in which a vehicular illumination device 4 relating to the first illustrative embodiment (hereinafter, referred to as the "illumination device 4") is mounted. FIG. 1A is a top view of the vehicle 1, and FIG. 1B is a side view of the vehicle 1. The vehicle I is an automobile capable of travelling in an automatic driving mode and includes the illumination device 4. The illumination device 4 includes an illumination unit 42 and an illumination control unit 43 (refer to FIG. 2), and the illumination unit 42 of the illumination device 4 is arranged on a vehicle body roof of the vehicle 1 (refer to FIG. 1). Also, the illumination unit 42 is configured to irradiate light over an entire circumference (360°) of the illumination unit 42 in a horizontal direction. Here, the horizontal direction refers to a direction including the front and rear direction and the right and left direction.

Thereby, the illumination unit 42 can present information indicative of a driving mode of the vehicle 1 toward an outside of the vehicle 1 over the entire circumference of the vehicle 1 in the horizontal direction. In particular, the illumination device 4 can present the information relating to the driving mode toward pedestrians, other vehicles and the like around the vehicle 1. Meanwhile, in the first illustrative embodiment, the illumination unit 42 is arranged on the vehicle body roof, for example. However, the arrangement position and shape of the illumination unit 42 are not particularly limited. For example, the illumination unit 42 may be arranged on a vehicle body side surface of the vehicle 1 or a vehicle body back surface facing a road surface.

Subsequently, a vehicle system 2 of the vehicle 1 is described with reference to FIG. 2. FIG. 2 is a block diagram of the vehicle system 2. As shown in FIG. 2, the vehicle system 2 includes a vehicle control unit 3, the illumination device 4, a sensor 5, a camera 6, a radar 7, a HMI (Human Machine Interface) 8, a GPS (Global Positioning System) 9, a wireless communication unit 10, and a map information storage 11. In addition, the vehicle system 2 includes a steering actuator 12, a steering device 13, a brake actuator 14, a brake device 15, an accelerator actuator 16, and an accelerator device 17.

The vehicle control unit 3 is configured to control travelling of the vehicle 1. The vehicle control unit 3 is configured by, for example, an electronic control unit (ECU). The electronic control unit includes a microcontroller having a processor and a memory, and other electronic circuits (for example, transistors, and the like). The processor is, for example, a CPU (Central Processing Unit), an MPU (Micro Processing Unit) and/or a GPU (Graphics Processing Unit). The memory includes a ROM (Read Only Memory) in which diverse vehicle control programs (for example, an artificial intelligence (AI) program for automatic driving, and the like) are stored, and a RAM (Random Access Memory) in which diverse vehicle control data is temporarily stored. The processor is configured to develop, on the RAM, a program designated from the diverse vehicle control programs stored in the ROM and to execute a variety of processes in cooperation with the RAM.

As described above, the illumination device 4 includes the illumination unit 42 and the illumination control unit 43. The illumination unit 42 includes a plurality of light emitting elements such as LEDs (Light Emitting Diodes) or laser and is configured to irradiate light toward the outside of the vehicle 1. The illumination control unit 43 is configured by an electronic control unit (ECU). The illumination control unit 43 is electrically connected to a power supply (not shown), and includes a microcontroller having a processor such as a CPU and a GPU and a memory such as a ROM and a RAM, and other electronic circuits (for example, a drive circuit such as an LED driver). In the first illustrative embodiment, the vehicle control unit 3 and the illumination control unit 43 are provided as separate components but may be integrally configured. That is, the illumination control unit 43 and the vehicle control unit 3 may be configured by a single electronic control unit. The illumination control unit 43 is configured to change an illumination state of the illumination unit 42 (lighting/lights-out, an illumination color, luminescence intensity, a light emitting area or a blinking cycle) in accordance with the driving mode of the vehicle I (which will be described later). Specifically, the vehicle control unit 3 is configured to generate a mode signal indicative of the driving mode of the vehicle 1 and to transmit the mode signal to the illumination control unit 43. The illumination control unit 43 is configured to change the illumination state of the illumination unit 42, based on the received mode signal.

The sensor 5 includes an acceleration sensor, a speed sensor, a gyro sensor, and the like. The sensor 5 is configured to detect a travelling condition of the vehicle 1 and to output travelling condition information to the vehicle control unit 3. The sensor 5 may further include a seating sensor configured to detect whether a driver is sitting on a driver seat, a face direction sensor configured to detect a direction of a driver's face, and an external weather sensor configured to detect an external weather condition.

The camera 6 is, for example, a camera including an imaging device such as a CCD (Charge-Coupled Device) and CMOS (complementary MOS). The radar 7 is a millimeter wave radar, a microwave radar, a laser radar, or the like. The camera 6 and the radar 7 are configured to detect surrounding environments (other vehicles, pedestrians, road shapes, traffic signs, obstacles, and the like) of the vehicle 1 and to output surrounding environment information to the vehicle control unit 3.

The HMI 8 includes an input unit configured to receive an input operation from a driver and an output unit configured to output the travelling information and the like to the driver. The input unit includes a steering wheel, an accelerator pedal, a brake pedal, a driving mode changeover switch for switching the driving mode of the vehicle 1, and the like. The output unit is a display for displaying diverse travelling information.

The GPS 9 is configured to acquire current position information of the vehicle 1 and to output the acquired current position information to the vehicle control unit 3. The wireless communication unit 10 is configured to receive travelling information of other vehicles around the vehicle 1 from the other vehicles and to transmit the travelling information of the vehicle 1 to the other vehicles (inter-vehicle communication). Also, the wireless communication unit 10 is configured to receive infrastructure information from infrastructure equipment such as traffic lights and sign lamps and to transmit the travelling information of the vehicle 1 to the infrastructure equipment (road-to-vehicle communication). The map information storage 11 is an external storage device such as a hard disk drive in which map information is stored, and is configured to output the map information to the vehicle control unit 3.

When the vehicle 1 travels in an automatic driving mode, the vehicle control unit 3 automatically generates at least one of a steering control signal, an accelerator control signal and a brake control signal, based on the travelling condition information, the surrounding environment information, the current position information, the map information, and the like. The steering actuator 12 is configured to receive the steering control signal from the vehicle control unit 3 and to control the steering device 13 on the basis of the received steering control signal. The brake actuator 14 is configured to receive the brake control signal from the vehicle control unit 3 and to control the brake device 15 on the basis of the received brake control signal. The accelerator actuator 16 is configured to receive the accelerator control signal from the vehicle control unit 3 and to control the accelerator device 17 on the basis of the received accelerator control signal. In this way, in the automatic driving mode, the travelling of the vehicle 1 is automatically controlled by the vehicle system 2.

On the other hand, when the vehicle 1 travels in a manual driving mode, the vehicle control unit 3 generates a steering control signal, an accelerator control signal and a brake control signal in conformity with a manual operation of a driver on the accelerator pedal, the brake pedal and the steering wheel. In this way, in the manual driving mode, the steering control signal, the accelerator control signal and the brake control signal are generated by the manual operation of the driver, so that the travelling of the vehicle 1 is controlled by the driver.

Subsequently, the driving mode of the vehicle 1 is described. The driving mode includes an automatic driving mode and a manual driving mode. The automatic driving mode includes a full-automatic driving mode, an advanced driving support mode, and a driving support mode. In the full-automatic driving mode, the vehicle system 2 is configured to automatically perform all of the travelling controls of the steering control, the brake control and the accelerator control, and the driver is not in a state where it is possible to drive the vehicle 1. In the advanced driving support mode, the vehicle system 2 is configured to automatically perform all of the travelling controls of the steering control, the brake control and the accelerator control, and the driver does not drive the vehicle 1 although the driver is in a state where it is possible to drive the vehicle 1. In the driving support mode, the vehicle system 2 is configured to automatically perform a part of the travelling controls of the steering control, the brake control and the accelerator control, and the driver drives the vehicle 1 under the driving support of the vehicle system 2. On the other hand, in the manual driving mode, the vehicle system 2 is configured not to automatically perform the travelling controls, and the driver drives the vehicle 1 without the driving support of the vehicle system 2.

Also, the driving mode of the vehicle 1 may be switched by operating a driving mode changeover switch. In this case, the vehicle control unit 3 is configured to switch the driving mode of the vehicle 1 among the four driving modes (the full-automatic driving mode, the advanced driving support mode, the driving support mode, and the manual driving mode) in accordance with a driver's operation on the driving mode changeover switch. Also, the driving mode of the vehicle 1 may be automatically switched on the basis of information relating to a travel-allowed section where travelling of an automatic driving vehicle is allowed or a travel-prohibited section where the travelling of the automatic driving vehicle is prohibited or information relating to the external weather condition. In this case, the vehicle control unit 3 is configured to switch the driving mode of the vehicle 1, based on such information. Also, the driving mode of the vehicle 1 may be automatically switched by using a seating sensor, a face direction sensor, or the like. In this case, the vehicle control unit 3 is configured to switch the driving mode of the vehicle 1, based on an output signal from the seating sensor or the face direction sensor.

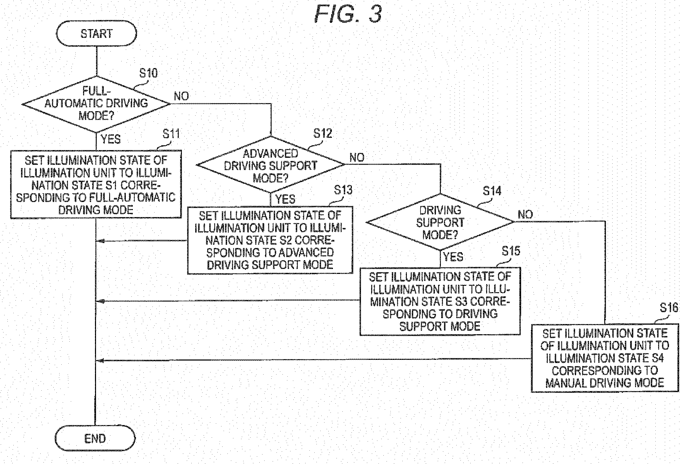

Subsequently, processing of changing the illumination state of the illumination unit 42 in accordance with the driving mode of the vehicle 1 is described with reference to FIG. 3. First, the illumination control unit 43 receives a mode signal indicative of the driving mode of the vehicle 1 from the vehicle control unit 3. Then, the illumination control unit 43 determines whether the received mode signal indicates the full-automatic driving mode (step S10). When it is determined that the mode signal indicates the full-automatic driving mode (YES in step S10), the illumination control unit 43 sets the illumination state of the illumination unit 42 to an illumination state S1 corresponding to the full-automatic driving mode (step S11).

On the other hand, when it is determined that the mode signal does not indicate the full-automatic driving mode (NO in step S10), the illumination control unit 43 determines whether the mode signal indicates the advanced driving support mode (step S12). When it is determined that the mode signal indicates the advanced driving support mode (YES in step S12), the illumination control unit 43 sets the illumination state of the illumination unit 42 to an illumination state S2 corresponding to the advanced driving support mode (step S13).

On the other hand, when it is determined that the mode signal does not indicate the advanced driving support mode (NO in step S12), the illumination control unit 43 determines whether the mode signal indicates the driving support mode (step S14). When it is determined that the mode signal indicates the driving support mode (YES in step S14), the illumination control unit 43 sets the illumination state of the illumination unit 42 to an illumination state S3 corresponding to the driving support mode (step S15).

On the other hand, when it is determined that the mode signal does not indicate the driving support mode (NO in step S14), the illumination control unit 43 determines that the mode signal indicates the manual driving mode, and sets the illumination state of the illumination unit 42 to an illumination state S4 corresponding to the manual driving mode (step S16). In this way, the processing is over. Also, whenever the illumination control unit 43 receives the mode signal from the vehicle control unit 3, the processing is executed.

Like this, according to the first illustrative embodiment, since the illumination state of the illumination unit 42 is set to the predetermined illumination state in accordance with the driving mode of the vehicle 1, it is possible to provide the illumination device 4 capable of displaying the information indicative of the driving mode of the vehicle 1 toward the pedestrians, the other vehicles and the like around the vehicle 1.

Also, since the illumination state of the illumination unit 42 is changed to the illumination states S1 to S4 in accordance with the driving mode of the vehicle 1, the pedestrians, the other vehicles or the like around the vehicle 1 can visually recognize whether the driving mode of the vehicle 1 is the full-automatic driving mode, the advanced driving support mode, the driving support mode or the manual driving mode. In this case, the respective illumination states S1 to S4 are preferably the different illumination states. For example, since the illumination state of the illumination unit 42 is changed from the illumination state S2 to the illumination state S3 when the driving mode is changed from the advanced driving support mode to the driving support mode, the pedestrians, other vehicles and the like around the vehicle 1 can perceive that the driving mode of the vehicle 1 is changed from the advanced driving support mode to the driving support mode.

### <Change in Illumination State: Lighting/Lights-out of Illumination Unit 42>

Subsequently, as an example of changing the illumination state of the illumination unit 42, an example where the illumination control unit 43 turns on and off the illumination unit 42 is described. First, a case (hereinafter, referred to as "Case 1") where the illumination control unit 43 turns on the illumination unit 42 when the driving mode of the vehicle 1 is the full-automatic driving mode is described. In this case, the illumination control unit 43 turns on the illumination unit 42 in the illumination state S1 shown in FIG. 3 and turns off the illumination unit 42 in the illumination states S2 to S4. In Case 1, the pedestrians, the other vehicles and the like around the vehicle 1 can visually recognize that the driving mode of the vehicle 1 is the full-automatic driving mode.

Subsequently, a case (Case 2) where the illumination control unit 43 turns on the illumination unit 42 when the driving mode of the vehicle 1 is the full-automatic driving mode or the advanced driving support mode is described. In this case, the illumination control unit 43 turns on the illumination unit 42 in the illumination states S1 and S2 and turns off the illumination unit 42 in the illumination states S3 and S4. In Case 2, the pedestrians, the other vehicles and the like around the vehicle 1 can visually recognize that the driving mode of the vehicle 1 is the full-automatic driving mode or the advanced driving support mode.

Also, a case (Case 3) where the illumination control unit 43 turns on the illumination unit 42 when the driving mode of the vehicle 1 is the full-automatic driving mode, the advanced driving support mode or the driving support mode is described. In this case, the illumination control unit 43 turns on the illumination unit 42 in the illumination states S1 to S3 and turns off the illumination unit 42 in the illumination state S4. In Case 3, the pedestrians, the other vehicles and the like around the vehicle 1 can visually recognize that the driving mode of the vehicle 1 is the full-automatic driving mode, the advanced driving support mode or the driving support mode (i.e., the automatic driving mode). In other words, the other vehicles and the like can visually recognize that the driving mode of the vehicle 1 is the automatic driving mode.

The lighting/lights-out states of the illumination states S1 to S4 in each of Cases 1 to 3 are summarized in a following table.

**[Table 1]**

| | Case 1 | Case 2 | Case 3 |
|---|---|---|---|
| Illumination State S1 | Lighting | Lighting | Lighting |
| Illumination State S2 | Lights-out | Lighting | Lighting |
| Illumination State S3 | Lights-out | Lights-out | Lighting |
| Illumination State S4 | Lights-out | Lights-out | Lights-out |

Meanwhile, in Case 1, the illumination control unit 43 turns on the illumination unit 42 in the illumination state S1 and turns off the illumination unit 42 in the illumination states S2 to S4. However, on the contrary, the illumination control unit 43 may turn off the illumination unit 42 in the illumination state S1 and turn on the illumination unit 42 in the illumination states S2 to S4. Also in this case, the pedestrians, the other vehicles and the like around the vehicle 1 can visually recognize that the driving mode of the vehicle I is the full-automatic driving mode. Similarly, in Case 2, the illumination control unit 43 may turn off the illumination unit 42 in the illumination states S1 and S2 and turn on the illumination unit 42 in the illumination states S3 and S4. Also in Case 3, the illumination control unit 43 may turn off the illumination unit 42 in the illumination states S1 to S3 and turn on the illumination unit 42 in the illumination state S4. Also in these cases, it is possible to obtain the same effects as described above. Also, it is preferable that the illumination color of the illumination unit 42 is green when the illumination unit 42 is turned on.

### <Change in Illumination State: Light Emitting Area of Illumination Unit 42>

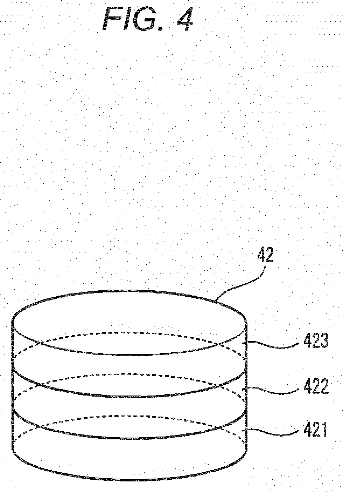

Subsequently, as another example of changing the illumination state of the illumination unit 42, an example where the illumination control unit 43 changes the light emitting area of the illumination unit 42 is described. As shown in FIG. 4, it is assumed that the illumination unit 42 has three light emitting areas 421 to 423. In this example, light emitting elements (not shown) such as LEDs that are independently turned on and off are arranged in each of the light emitting areas 421 to 423.

In this case, the illumination control unit 43 may turn on the light emitting areas 421 to 423 in the illumination state S1, turn on the light emitting areas 421, 422 in the illumination state S2, turn on the light emitting area 421 in the illumination state S3, and turn off the light emitting areas 421 to 423 in the illumination state S4. In this way, the light emitting area of the illumination unit 42 is different in each of the illumination states S1 to S4.

According to the above configuration, since the light emitting area of the illumination unit 42 is changed in accordance with the automatic driving mode of the vehicle 1, it is possible to provide the illumination device 4 capable of displaying the information indicative of the driving mode of the vehicle 1 toward the pedestrians, the other vehicles and the like around the vehicle 1. In the meantime, the change in the light emitting area is merely an example. An example where the light emitting area is variously changed can be applied, inasmuch as the light emitting area of the illumination unit 42 is changed in accordance with the automatic driving mode of the vehicle 1.

### <Change in Illumination State: Illumination Color of Illumination Unit 42>

Subsequently, as another example of changing the illumination state of the illumination unit 42, an example where the illumination control unit 43 changes the illumination color of the illumination unit 42 is described. In this example, a plurality of (for example, three) light emitting elements (not shown) such as LEDs is arranged in the illumination unit 42, and the light emitted from each light emitting element has a different emission color.

In this case, the illumination control unit 43 may set the illumination color of the illumination unit 42 to white in the illumination state S1, set the illumination color of the illumination unit 42 to green in the illumination state S2, set the illumination color of the illumination unit 42 to blue in the illumination state S3, set the illumination color of the illumination unit 42 to red or turn off the illumination unit 42 (the illumination color is black) in the illumination state S4. In this way, the illumination color of the illumination unit 42 is different in each of the illumination states S1 to S4.

In this way, since the illumination color of the Illumination unit 42 is changed in accordance with the driving mode of the vehicle 1, it is possible to provide the illumination device 4 capable of displaying the information indicative of the driving mode of the vehicle 1 toward the pedestrians, the other vehicles and the like around the vehicle 1. In the meantime, the change in the illumination color is merely an example. An example where the illumination color is variously changed can be applied, inasmuch as the illumination color of the illumination unit 42 is changed in accordance with the driving mode of the vehicle 1.

### <Change in Illumination State: Blinking Cycle of Illumination Unit 42>

Also, as another example of changing the illumination state of the illumination unit 42, the illumination control unit 43 may change a blinking cycle (strictly speaking, a blinking cycle of the light emitted from the illumination unit 42) of the illumination unit 42. At this time, the illumination control unit 43 may set the blinking cycle of the illumination unit 42 to T1 in the illumination state S1, set the blinking cycle of the illumination unit 42 to T2 in the illumination state S2, set the blinking cycle of the illumination unit 42 to T3 in the illumination state S3, and set the blinking cycle of the illumination unit 42 to T4 in the illumination state S4.

### <Change in Illumination State: Luminescence Intensity of Illumination Unit 42>

Also, as another example of changing the illumination state of the illumination unit 42, the illumination control unit 43 may change the luminescence intensity of the illumination unit 42. At this time, the illumination control unit 43 may set the luminescence intensity of the illumination unit 42 to 11 in the illumination state S1, set the luminescence intensity of the illumination unit 42 to 12 in the illumination state S2, set the luminescence intensity of the illumination unit 42 to 13 in the illumination state S3, and set the luminescence intensity of the illumination unit 42 to 14 in the illumination state S4.

In the first illustrative embodiment, as an example of the change in the illumination state of the illumination unit 42, the changes in the lighting/lights-out, the light emitting area, the illumination color, the blinking cycle and the luminescence intensity of the illumination unit 42 have been described, respectively. However, the change in the illumination state is not limited thereto. Various changes in the illumination state can be applied, inasmuch as the illumination state of the illumination unit 42 can be changed in accordance with the driving mode of the vehicle 1. For example, the illumination state of the illumination unit 42 may be changed by combining the lighting/lights-out, the light emitting area, the illumination color, the blinking cycle and the luminescence intensity of the illumination unit 42.

Also, the illumination control unit 43 may be configured to predict a lifetime of the illumination unit 42, based on a current value and a voltage value of a lighting control circuit configuring the illumination control unit 43 and a temperature and a humidity inside the illumination unit 42, and to change the illumination state (lighting/lights-out/light emitting area/illumination color/blinking cycle/luminescence intensity) of the illumination unit, based on the predicted lifetime of the illumination unit 42. For example, when it is predicted that the predicted lifetime of the illumination unit 42 is short (for example, the predicted lifetime is 100 hours or shorter), the illumination control unit 43 may set the illumination color of the illumination unit 42 to a first illumination color (for example, red). Also, when the predicted lifetime of the illumination unit 42 is within a predetermined range (for example, the predicted lifetime is in the range of 100 hours to 500 hours), the illumination control unit 43 may set the illumination color of the illumination unit 42 to a second illumination color (for example, yellow). Also, when it is predicted that the predicted lifetime of the illumination unit 42 is long (for example, the predicted lifetime is 500 hours or longer), the illumination control unit 43 may set the illumination color of the illumination unit 42 to a third illumination color (for example, green). Meanwhile, instead of the illumination control unit 43, the vehicle control unit 3 may be configured to predict the lifetime of the illumination unit 42. In this case, the illumination control unit 43 may be configured to receive data indicative of the predicted lifetime of the illumination unit 42 from the vehicle control unit 3 and then to change the illumination state of the illumination unit 42, based on the received data.

Here, a temperature sensor configured to measure the internal temperature of the illumination unit 42 and a humidity sensor configured to measure the internal humidity of the illumination unit 42 may be provided inside the illumination unit 42.

Subsequently, an example of predicting the lifetime of the illumination unit 42 (in particular, the light emitting element provided in the illumination unit 42) on the basis of the internal temperature of the illumination unit 42 is described below. In this case, a lifetime prediction formula indicative of a relationship between a use time t of the light emitting element and a luminance L of the light emitting element may be stored in the memory of the illumination control unit 43. The illumination control unit 43 may be configured to determine the predicted lifetime of the illumination unit 42, based on the lifetime prediction formula and the current luminance L of the light emitting element. Also, the lifetime prediction formula stored in the memory may be acquired from a server arranged on a communication network via the wireless communication unit 10. In this case, the illumination control unit 43 may be configured to periodically acquire the updated lifetime prediction formula from the server arranged on the communication network. For example, when the lifetime prediction formula stored in the memory is a lifetime prediction formula based on the indoor temperature of 30°C and the internal temperature of the illumination unit 42 acquired from the temperature sensor is 50°C, the illumination control unit 43 may acquire the lifetime prediction formula based on the indoor temperature of 50°C from the server and then determine the predicted lifetime of the illumination unit 42 on the basis of the acquired lifetime prediction formula based on the indoor temperature of 50°C and the current luminance L of the light emitting element. In this way, a suitable lifetime prediction formula can be acquired via the communication network, so that the lifetime of the illumination unit 42 can be predicted more accurately. Also, since the illumination control unit 43 is configured to change the illumination state of the illumination unit 42 in accordance with the predicted lifetime of the illumination unit 42, it is possible to present the information relating to the lifetime of the illumination unit 42 toward the outside of the vehicle. In this way, the pedestrians and the like outside the vehicle can perceive the lifetime of the illumination unit 42 by visually recognizing the illumination state of the illumination unit 42.

Also, the illumination control unit 43 may be configured to change the illumination state of the illumination unit 42 (lighting/lights-out/light emitting area/illumination color/blinking cycle/luminescence intensity), based on the current condition of a driver. For example, in a case where one of the plurality of cameras 6 is configured to capture the driver, the vehicle control unit 3 may acquire the captured image of the driver from the camera 6 and then determine the current condition of the driver, based on the acquired captured image and a face recognition algorithm. Here, when it is determined that the driver cannot drive (for example, when it is determined that the driver is dozing), the vehicle control unit 3 generates a predetermined illumination control signal and then transmits the predetermined illumination control signal to the illumination control unit 43. The illumination control unit 43 may set the illumination color of the illumination unit 42 to a predetermined illumination color (for example, red), based on the predetermined illumination control signal. In this way, it is possible to present the information relating to the current condition of the driver toward the outside of the vehicle.

Also, in the first illustrative embodiment, the illumination state of the illumination unit 42 is changed in accordance with the driving mode of the vehicle 1. However, instead of the illumination unit 42 or in addition to the illumination unit 42, a speaker (not shown) may be provided so that sound output from the speaker is changed in accordance with the driving mode of the vehicle 1. For example, the speaker may be installed at a predetermined position of the vehicle so as to output the sound indicative of the motion mode of the vehicle 1 toward the outside of the vehicle. In this case, a speaker control unit (not shown) configured to control the speaker may store data relating to the sound indicative of the motion mode of the vehicle 1. Specifically, the speaker control unit may store data relating to pitch, magnitude, rhythm, voice, melody and voice guidance of the sound indicative the motion mode of the vehicle 1. The speaker control unit receives a mode signal indicative of the driving mode of the vehicle 1 from the vehicle control unit 3 and then determines the sound (for example, the pitch, magnitude, rhythm, voice, melody and voice guidance of the sound) to be output to the speaker in accordance with the received mode signal. Thereafter, the speaker control unit outputs the determined voice guidance to the speaker. By using the speaker in this way, it is possible to present the information indicative of the driving mode of the vehicle 1 to the pedestrians, the other vehicles and the like outside the vehicle.

### (Second Illustrative Embodiment)

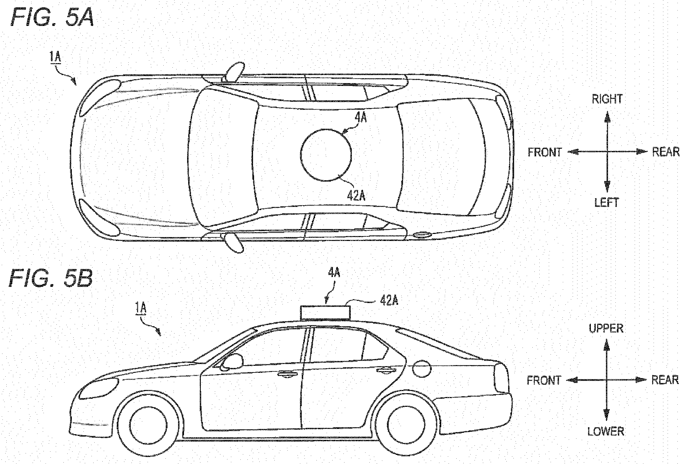

Hereinafter, a second illustrative embodiment is described with reference to FIGS. 5 to 8. Meanwhile, in the below, for the sake of convenience of description, the description of members having the same reference numerals as those already described in the description of the first illustrative embodiment will be omitted. Also, for the sake of convenience of description, dimensions of the respective members shown in the drawings may be different from actual dimensions of the respective members.

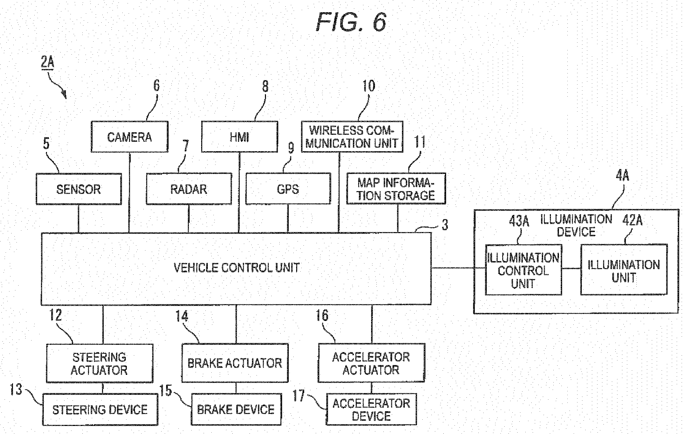

FIG. 5 depicts a vehicle 1A in which a vehicular illumination device 4A relating to the second illustrative embodiment (hereinafter, referred to as "illumination device 4A") is mounted. FIG. 5A is a top view of the vehicle 1A and FIG. 5B is a side view of the vehicle 1A. The vehicle 1A is an automobile capable of travelling in the full-automatic driving mode and includes the illumination device 4A. The illumination device 4A includes an illumination unit 42A and an illumination control unit 43A (refer to FIG. 6), and the illumination unit 42A of the illumination device 4A is arranged on a vehicle body roof of the vehicle 1A (refer to FIG. 5). Also, the illumination unit 42A is configured to irradiate light over an entire circumference (360°) of the illumination unit 42A in the horizontal direction. Here, the horizontal direction refers to a direction including the front and rear direction and the right and left direction.

The illumination unit 42A can present information, which indicates that the vehicle 1A is travelling in the full-automatic driving mode in a state where there is no passenger on a driver seat, toward an outside of the vehicle 1A over the entire circumference of the vehicle 1A in the horizontal direction. In particular, the illumination device 4A can present the information toward the pedestrians, the other vehicles and the like around the vehicle 1A. Meanwhile, in the second illustrative embodiment, the illumination unit 42A is arranged on the vehicle body roof, for example. However, the arrangement position and shape of the illumination unit 42A are not particularly limited. For example, the illumination unit 42A may be arranged on a vehicle body side surface of the vehicle 1A or a vehicle body back surface facing a road surface,

Subsequently, a vehicle system 2A of the vehicle 1A is described with reference to FIG. 6. FIG. 6 is a block diagram of the vehicle system 2A. As shown in FIG. 6, the vehicle system 2A has substantially the same configuration as the vehicle system 2 of FIG. 2, except the illumination device 4A.

As described above, the illumination device 4A includes the illumination unit 42A and the illumination control unit 43A. The illumination unit 42A includes a plurality of light emitting elements such as LEDs (Light Emitting Diodes) or laser and is configured to irradiate light toward the outside of the vehicle 1A. The illumination control unit 43A is configured by an electronic control unit (ECU), and sets an illumination state of the illumination unit 42A (lighting/lights-out, an illumination color, a light emitting area, a blinking cycle, a luminescence intensity and the like) to a predetermined illumination state when a driving mode of the vehicle 1A is the full-automatic driving mode and there is no passenger on the driver seat of the vehicle 1A. For example, in the above case, the illumination control unit 43A may turn on or off the illumination unit 42A. Alternatively, the illumination control unit 43A may set an illumination color of the illumination unit 42A to a predetermined illumination color (for example, white, green, blue or the like). Also, the illumination control unit 43A may set a light emitting area of the illumination unit 42A to a predetermined light emitting area (for example, a half of a volume of the illumination unit 42A is set as the light emitting area). Also, the illumination control unit 43A may set a blinking cycle of the illumination unit 42A to a predetermined blinking cycle T. Also, the illumination control unit 43A may set a luminescence intensity of the illumination unit 42A to a predetermined luminescence intensity 1.

Specifically, when it is determined that the driving mode of the vehicle 1A is the full-automatic driving mode and there is no passenger on the driver seat of the vehicle 1A, the vehicle control unit 3 generates a predetermined illumination control signal and transmits the predetermined illumination control signal to the illumination control unit 43A. The illumination control unit 43A sets the illumination state of the illumination unit 42A to a predetermined illumination state, based on the received predetermined illumination control signal. In the meantime, the illumination control unit 43A and the vehicle control unit 3 are provided as separate components but may be integrally configured. That is, the illumination control unit 43A and the vehicle control unit 3 may be configured by a single electronic control unit.

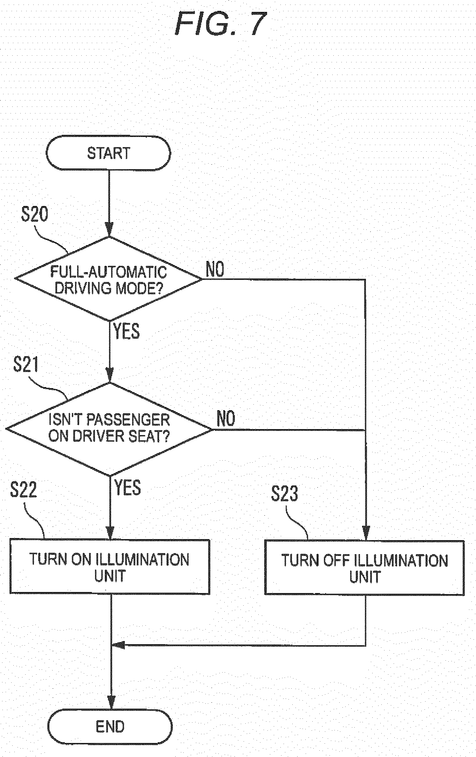

Subsequently, processing of turning on the illumination unit 42A when the driving mode of the vehicle 1A is the full-automatic driving mode and there is no passenger on the driver seat of the vehicle 1A is described with reference to FIG. 7. First, the vehicle control unit 3 determines whether the driving mode of the vehicle 1A is the full-automatic driving mode (step S20). When it is determined that the driving mode of the vehicle 1A is the full-automatic driving mode (YES in step S20), the vehicle control unit 3 determines whether there is a passenger on the driver seat of the vehicle 1A by using a seating sensor, a passenger detection sensor or the like (step S21). When it is determined that there is no passenger on the driver seat (YES in step S21), the vehicle control unit 3 generates a lighting signal (an example of the predetermined illumination control signal) and transmits the lighting signal to the illumination control unit 43A. Then, the illumination control unit 43A turns on the illumination unit 42A, based on the lighting signal (step S22).

On the other hand, when it is determined that the driving mode of the vehicle 1A is not the full-automatic driving mode (NO in step S20) or when it is determined that there is a passenger on the driver seat (NO in step S21), the vehicle control unit 3 generates a lights-out signal and transmits the lights-out signal to the illumination control unit 43A. Then, the illumination control unit 43A turns off the illumination unit 42A, based on the lights-out signal (step S23). In the meantime, the processing of step S21 may be executed before step S20 or the processing of step S20 and step S21 may be executed at the same time.

According to the second illustrative embodiment, it is possible to provide the illumination device 4A and the vehicle system 2A capable of displaying information (hereinafter, appropriately referred to as "vehicle information" for sake of convenience of description), which indicates that there is no passenger on the driver seat and the vehicle 1A is travelling in the full-automatic driving mode, toward the pedestrians, the other vehicles and the like around the vehicle 1A.

Also, the pedestrians, the other vehicles and the like around the vehicle 1A can visually recognize that the vehicle 1A is travelling in the full-automatic driving mode in the state where there is no passenger on the driver seat by the lighting of the illumination unit 42A.

In the example of FIG. 7, the illumination device 4A displays the vehicle information toward the outside by turning on the illumination unit 42A. However, on the contrary, the illumination device 4A may be configured to display the vehicle information toward the outside by turning off the illumination unit 42A (in this case, the illumination unit 42A is turned off in step S22 and the illumination unit 42A is turned on in step S23). Also, the illumination device 4A may be configured to display the vehicle information toward the outside by setting the illumination state of the illumination unit 42A (an illumination color, a light emitting area, a blinking cycle and the like) to the predetermined illumination state.

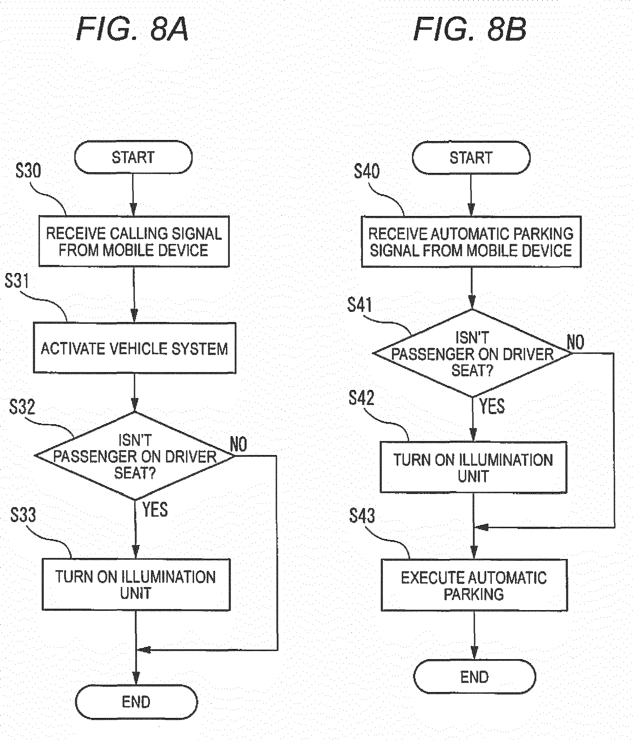

Subsequently, another example of the processing of displaying the vehicle information toward the outside by turning on the illumination unit 42A is described with reference to FIG. 8. FIG. 8A is a flowchart depicting processing of turning on the illumination unit 42A when a calling signal is received from a mobile device carried by a pedestrian, such as a smart phone, a tablet or the like. FIG. 8B is a flowchart depicting processing of turning on the illumination unit 42A when an automatic parking instruction signal is received from the mobile device.

In the flowchart of FIG. 8A, a situation where a possessor of the vehicle 1A calls the vehicle 1A located at a position distant from a current position of the possessor to the current position by using the mobile device or a situation where a user calls a driverless taxi (a taxi configured to automatically drive in a state where there is no driver) to a current position of the user by using the mobile device is assumed. Hereinafter, the processing shown in FIG. 8A is described.

First, the wireless communication unit 10 receives a calling signal from the mobile device via a communication network such as Internet (step S30). The calling signal may include current position information of the mobile device. When the calling signal is acquired from the wireless communication unit 10, the vehicle control unit 3 activates the vehicle system 2A from a sleep state (step S31). At this time, the vehicle control unit 3 sets the driving mode of the vehicle 1A to the full-automatic driving mode. Also, in this state, the illumination unit 42A is turned off. Thereafter, the vehicle control unit 3 determines whether there is a passenger on the driver seat by using a seating sensor, a passenger detection sensor or the like (step S32). When it is determined that there is no passenger on the driver seat (YES in step S32), the vehicle control unit 3 generates a lighting signal and transmits the lighting signal to the illumination control unit 43A. Then, the illumination control unit 43A turns on the illumination unit 42A, based on the lighting signal (step S33). Then, the vehicle 1A starts to travel in the full-automatic driving mode, and travels to the current position of the mobile device. On the other hand, when it is determined that there is a passenger on the driver seat (NO in step S32), the vehicle control unit 3 keeps the illumination unit 42A in the lights-out state.

Meanwhile, in the flowchart of FIG. 8B, a situation where a driver getting off the vehicle 1A instructs the vehicle 1A to perform automatic parking by using the mobile device is assumed. Hereinafter, the processing of FIG. 8B is described.

First, the wireless communication unit 10 receives an automatic parking instruction signal from the mobile device via the communication network (step S40). The automatic parking instruction signal may include parking place information. When the automatic parking instruction signal is acquired from the wireless communication unit 10, the vehicle control unit 3 sets the driving mode of the vehicle 1A to the full-automatic driving mode. Also, in this state, the illumination unit 42A is turned off. Then, the vehicle control unit 3 determines whether there is a passenger on the driver seat by using a seating sensor, a passenger detection sensor or the like (step S41). When it is determined that there is no passenger on the driver seat (YES in step S41), the vehicle control unit 3 generates a lighting signal and transmits the lighting signal to the illumination control unit 43A. Then, the illumination control unit 43A turns on the illumination unit 42A, based on the lighting signal (step S42). Then, the vehicle 1A executes the automatic parking, based on the automatic driving instruction signal (step S43). On the other hand, when it is determined that there is a passenger on the driver seat (NO in step S41), the vehicle control unit 3 keeps the illumination unit 42A in the lights-out state.

Also in this example, the illumination device 4A displays the vehicle information toward the outside by turning on the illumination unit 42A. However, the illumination device 4A may display the vehicle information toward the outside by setting the illumination state of the illumination unit 42A (an illumination color, a light emitting area, a blinking cycle and the like) to a predetermined illumination state. Also, the illumination color of the illumination unit 42A is preferably green when the illumination unit 42A is turned on.

Also, like the first illustrative embodiment, the illumination control unit 43A may be configured to change the illumination state of the illumination unit 42A (lighting/lights-out/light emitting area/illumination color/blinking cycle/luminescence intensity), based on a predicted lifetime of the illumination unit 42A. Also, the illumination control unit 43A may be configured to change the illumination state of the illumination unit 42A, based on a current condition of the driver. Also, the information, which indicates that there is no passenger on the driver seat and the vehicle 1A is travelling in the full-automatic driving mode, may be presented to the pedestrians, the other vehicles and the like outside the vehicle 1A by using a speaker.

### (Third Illustrative Embodiment)

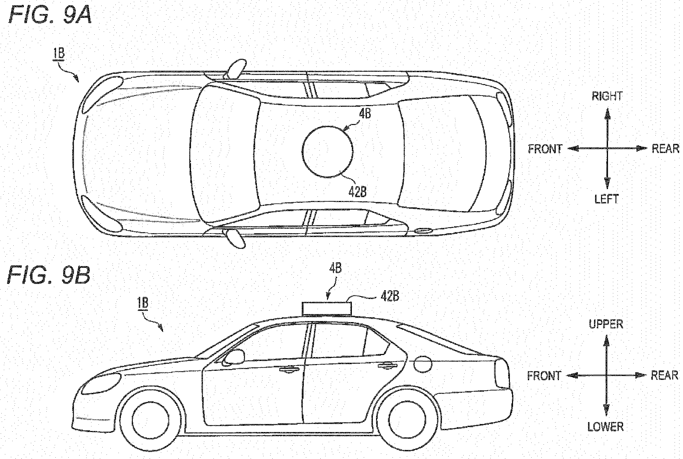

Hereinafter, a third illustrative embodiment is described with reference to FIGS. 9 to 12. Meanwhile, in the below, for the sake of convenience of description, the description of members having the same reference numerals as those already described in the description of the first and second illustrative embodiments will be omitted. Also, for the sake of convenience of description, dimensions of the respective members shown in the drawings may be different from actual dimensions of the respective members.

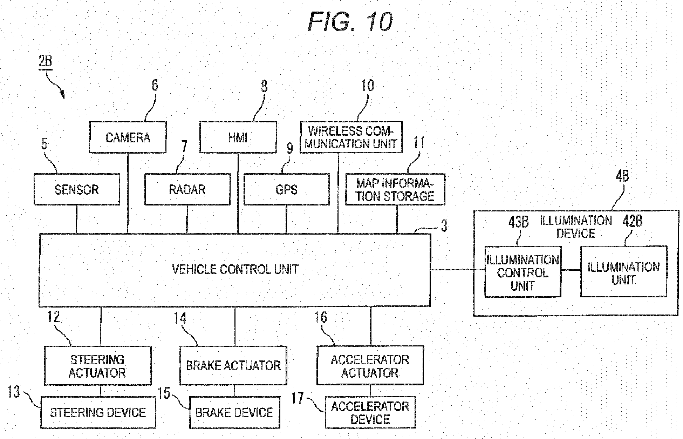

FIG. 9 depicts a vehicle 1B in which a vehicular illumination device 4B relating to the third illustrative embodiment (hereinafter, referred to as "illumination device 4B") is mounted. FIG. 9A is a top view of the vehicle 1B and FIG. 9B is a side view of the vehicle 1B. The vehicle 1B is an automobile capable of travelling in the full-automatic driving mode and includes the illumination device 4B. The illumination device 4B includes an illumination unit 42B and an illumination control unit 43B (refer to FIG. 10), and the illumination unit 42B of the illumination device 4B is arranged on a vehicle body roof of the vehicle 1B (refer to FIG. 9). Also, the illumination unit 42B is configured to irradiate light over an entire circumference (360°) of the illumination unit 42B in the horizontal direction.

The illumination unit 42B can present information, which indicates that the vehicle 1B is travelling in the full-automatic driving mode in a state where there is a passenger in the vehicle, toward an outside of the vehicle 1B over the entire circumference of the vehicle 1B in the horizontal direction. In particular, the illumination device 4B can present the information toward the pedestrians, the other vehicles and the like around the vehicle 1A. Meanwhile, in the third illustrative embodiment, the illumination unit 42B is arranged on the vehicle body roof, for example. However, the arrangement position and shape of the illumination unit 42B are not particularly limited. For example, the illumination unit 42B may be arranged on a vehicle body side surface of the vehicle 1B or a vehicle body back surface facing a road surface.

Subsequently, a vehicle system 2B of the vehicle 1B is described with reference to FIG. 10. FIG. 10 is a block diagram of the vehicle system 2B. As shown in FIG. 10, the vehicle system 2B has substantially the same configuration as the vehicle system 2 of FIG. 2, except the illumination device 4B.

As described above, the illumination device 4B includes the illumination unit 42B and the illumination control unit 43B. The illumination unit 42B includes a plurality of light emitting elements such as LEDs (Light Emitting Diodes) or laser and is configured to irradiate light toward the outside of the vehicle 1B. The illumination control unit 43B is configured by an electronic control unit (ECU), and sets an illumination state of the illumination unit 42B (lighting/lights-out, an illumination color, a light emitting area, a blinking cycle, a luminescence intensity and the like) to a predetermined illumination state when the driving mode of the vehicle 1B is the fill-automatic driving mode and there is a passenger in the vehicle 1B. For example, in the above case, the illumination control unit 43B may turn on or off the illumination unit 42B. Alternatively, the illumination control unit 43B may set an illumination color of the illumination unit 42A to a predetermined illumination color (for example, white, green, blue or the like). Also, the illumination control unit 43B may set a light emitting area of the illumination unit 42B to a predetermined light emitting area (for example, a half of a volume of the illumination unit 42B is set as the light emitting area). Also, the illumination control unit 43B may set a blinking cycle of the illumination unit 42B to a predetermined blinking cycle T. Also, the illumination control unit 43B may set a luminescence intensity of the illumination unit 42B to a predetermined luminescence intensity 1.

Specifically, when it is determined that the driving mode of the vehicle 1B is the full-automatic driving mode and there is a passenger in the vehicle 1B, the vehicle control unit 3 generates a predetermined illumination control signal and transmits the predetermined illumination control signal to the illumination control unit 43B. The illumination control unit 43B sets the illumination state of the illumination unit 42B to a predetermined illumination state, based on the received predetermined illumination control signal. In the meantime, the illumination control unit 43B and the vehicle control unit 3 are provided as separate components but may be integrally configured. That is, the illumination control unit 43B and the vehicle control unit 3 may be configured by a single electronic control unit.

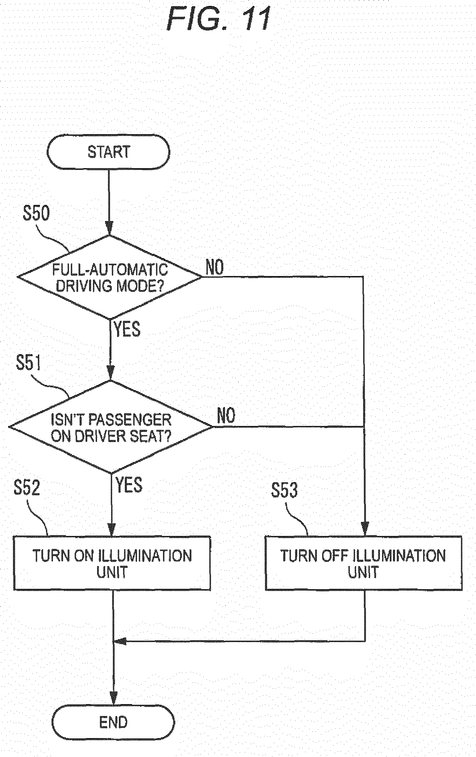

Subsequently, processing of turning on the illumination unit 42B when the driving mode of the vehicle 1B is the full-automatic driving mode and there is a passenger in the vehicle 1B is described with reference to FIG. 11. First, the vehicle control unit 3 determines whether the driving mode of the vehicle 1B is the full-automatic driving mode (step S50). When it is determined that the driving mode of the vehicle 1A is the full-automatic driving mode (YES in step S50), the vehicle control unit 3 determines whether there is a passenger in the vehicle 1B by using a passenger detection sensor or the like (step S51). When it is determined that there is a passenger in the vehicle 1B (YES in step S51), the vehicle control unit 3 generates a lighting signal (an example of the predetermined illumination control signal) and transmits the lighting signal to the illumination control unit 43B. Then, the illumination control unit 43B turns on the illumination unit 42B, based on the lighting signal (step S52).

On the other hand, when it is determined that the driving mode of the vehicle 1A is not the full-automatic driving mode (NO in step S50) or when it is determined that there is no passenger in the vehicle (NO in step S51), the vehicle control unit 3 generates a lights-out signal and transmits the lights-out signal to the illumination control unit 43B. Then, the illumination control unit 43B turns off the illumination unit 42B, based on the lights-out signal (step S53). In the meantime, the processing of step S51 may be executed before step S50 or the processing of step S50 and step S51 may be executed at the same time.

According to the third illustrative embodiment, it is possible to provide the illumination device 4B and the vehicle system 2B capable of displaying information (hereinafter, appropriately referred to as "vehicle information" for sake of convenience of description), which indicates that the vehicle 1B is travelling in the full-automatic driving mode in the state where there is a passenger in the vehicle 1B, toward the pedestrians, the other vehicles and the like around the vehicle 1B.

Also, the pedestrians, the other vehicles and the like around the vehicle 1B can visually recognize that the vehicle 1B is travelling in the full-automatic driving mode in the state where there is a passenger in the vehicle by the lighting of the illumination unit 42B.

In the example of FIG. 11, the illumination device 4B displays the vehicle information toward the outside by turning on the illumination unit 42B. However, on the contrary, the illumination device 4B may be configured to display the vehicle information toward the outside by turning off the illumination unit 42B (in this case, the illumination unit 42B is turned off in step S52 and the illumination unit 42B is turned on in step S53). Also, the illumination device 4B may be configured to display the vehicle information toward the outside by setting the illumination state of the illumination unit 42B (an illumination color, a light emitting area, a blinking cycle and the like) to the predetermined illumination state.

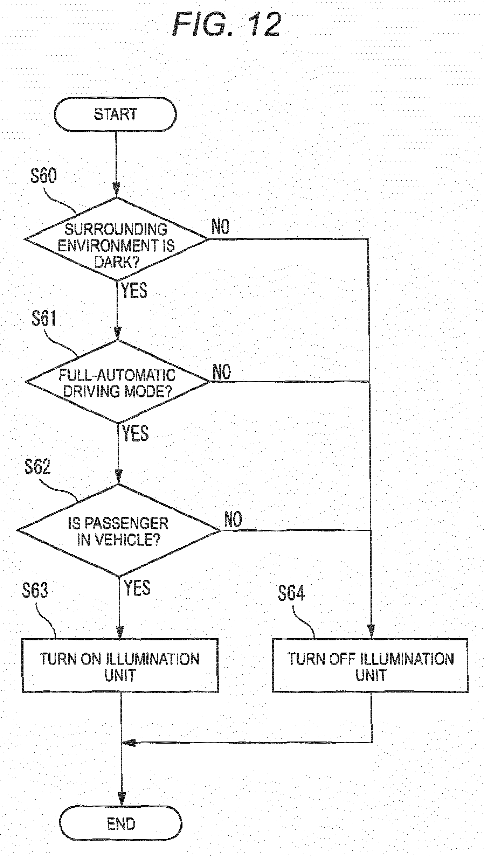

Subsequently, another example of the processing of displaying the vehicle information toward the outside by turning on the illumination unit 42B is described with reference to FIG. 12. FIG. 12 is a flowchart depicting processing of turning on the illumination unit 42B when a surrounding environment of the vehicle 1B is dark. As the situation where the surrounding environment of the vehicle 1B is dark, a situation where the vehicle 1B is traveling at night, a situation where the vehicle 1B is traveling in a tunnel, and the like may be considered.

First, the vehicle control unit 3 determines whether the surrounding environment of the vehicle 1B is dark by using an illuminance sensor or the like (step S60). When the vehicle control unit 3 determines that the surrounding environment of the vehicle 1B is dark (YES in step S60), the processing proceeds to step S61. On the other hand, when the vehicle control unit 3 determines that the surrounding environment of the vehicle 1B is not dark, the processing proceeds to step S64. In the meantime, since the processing of steps S61, S62, S63 and S64 corresponds to the processing of step S50, S51, S52 and S53 shown in FIG. 11, the descriptions thereof are here omitted.

Like this, in the example of FIG. 12, when the surrounding environment of the vehicle 1B is dark, the illumination unit 42B is turned on, so that the vehicle information is displayed toward the pedestrians, the other vehicles and the like around the vehicle 1B. In this case, since a driver of a following vehicle or an oncoming vehicle of the vehicle 1B can visually recognize the vehicle information of the vehicle 1B (particularly, there is a passenger in the vehicle), the driver will hesitate to irradiate glare light such as a high beam toward the vehicle 1B. Accordingly, it is possible to suppress the glare light from being irradiated to the vehicle 1B in advance by the information indicating that there is a passenger in the vehicle 1B travelling in the full-automatic driving mode.

Meanwhile, also in this example, the illumination device 4B displays the vehicle information toward the outside by turning on the illumination unit 42B. However, the illumination device 4B may be configured to display the vehicle information toward the outside by setting the illumination state of the illumination unit 42B (an illumination color, a light emitting area, a blinking cycle and the like) to a predetermined illumination state.

Also, like the first illustrative embodiment, the illumination control unit 43B may be configured to change the illumination state of the illumination unit 42B (lighting/lights-out/light emitting area/illumination color/blinking cycle/luminescence intensity) on the basis of a predicted lifetime of the illumination unit 42B. Also, the illumination control unit 43B may be configured to change the illumination state of the illumination unit 42B on the basis of a current condition of the driver. Also, the information, which indicates that the vehicle 1B is travelling in the full-automatic driving mode in the state where there is a passenger in the vehicle 1B, may be presented to the pedestrians, the other vehicles and the like outside the vehicle 1B by using a speaker.

### (Fourth Illustrative Embodiment)

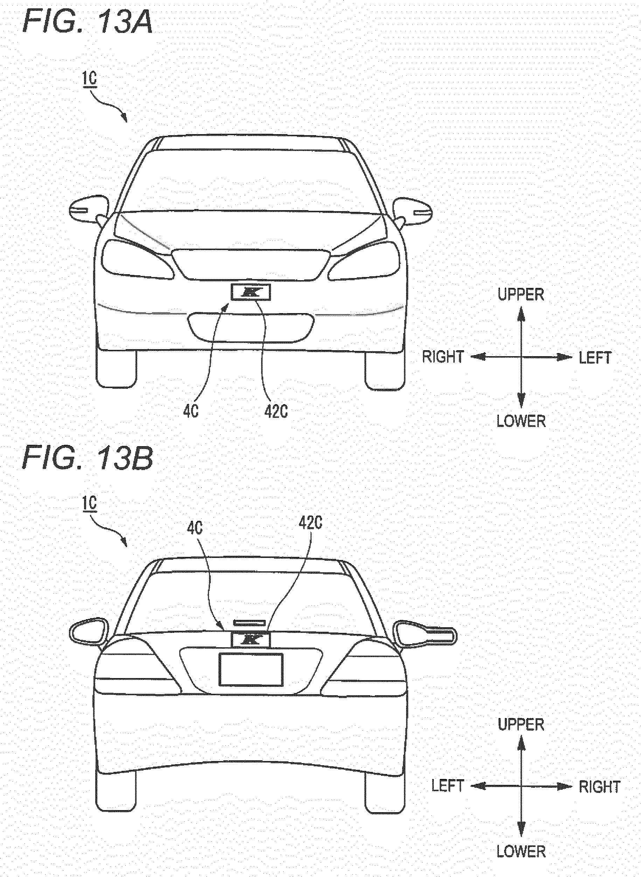

A fourth illustrative embodiment is described with reference to FIGS. 13 to 15. In the below, a vehicular display device 4C relating to the fourth illustrative embodiment (hereinafter, simply referred to as "display device 4C") is described.

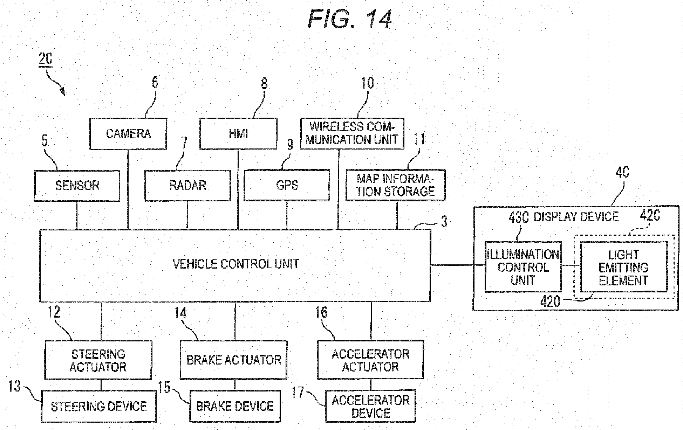

FIG. 13 depicts a vehicle 1C in which the display device 4C relating to the fourth illustrative embodiment is mounted. FIG. 13A is a front view of the vehicle 1C, and FIG. 13B is a rear view of the vehicle 1C. The vehicle 1C is an automobile capable of travelling in the automatic driving mode and includes the display device 4C. The display device 4C is configured to display information, which indicates that the vehicle 1C is a vehicle capable of travelling in the automatic driving mode, towards an outside of the vehicle 1C, and includes emblems 42C and an illumination control unit 43C (refer to FIG. 14). The emblems 42C of the display device 4C are attached to a front face and a rear face of the vehicle body of the vehicle 1C (refer to FIG. 13). The emblem 42C is attached to only a vehicle that can travel in the automatic driving mode. The pedestrians, the other vehicles and the like around the vehicle 1C can perceive that the vehicle 1C is a vehicle capable of travelling in the automatic driving mode by seeing the emblems 42C. As shown in FIG. 14, the emblem 42C includes one or more light emitting elements 420 such as LEDs or laser, and the light emitting elements 420 are configured to irradiate light toward a main body of the emblem 42C.

Subsequently, a vehicle system 2C of the vehicle 1C is described with reference to FIG. 14. FIG. 14 is a block diagram of the vehicle system 2C. As shown in FIG. 14, the vehicle system 2C has substantially the same configuration as the vehicle system 2 of FIG. 2, except the display device 4C.

As described above, the display device 4C includes the emblems 42C having the light emitting elements 420, and the illumination control unit 43C. The illumination control unit 43C is configured by an electronic control unit (ECU), and sets a light emitting state of the light emitting elements 420 (lighting/lights-out, an illumination color, a luminescence intensity, a light emitting area, a blinking cycle, and the like) to a predetermined light emitting state when the driving mode of the vehicle 1C is the automatic driving mode.

The illumination control unit 43C may be configured to turn on or off the light emitting elements 420. Alternatively, the illumination control unit 43C may be configured to set an illumination color of the light emitting elements 420 to a predetermined illumination color (for example, white, green, blue or the like). Also, the illumination control unit 43C may be configured to set a light emitting area of the light emitting elements 420 to a predetermined light emitting area. Also, the illumination control unit 43C may be configured to set a blinking cycle of the light emitting elements 420 to a predetermined blinking cycle T. Also, the illumination control unit 43C may be configured to set a luminescence intensity of the light emitting elements 420 to a predetermined luminescence intensity 1.

For example, when it is determined that the driving mode of the vehicle 1C is the automatic driving mode, the vehicle control unit 3 generates a lighting signal and transmits the lighting signal to the illumination control unit 43C. The illumination control unit 43C sets the illumination state of the light emitting elements 420 to a predetermined illumination state, based on the received lighting signal. In the meantime, the illumination control unit 43C and the vehicle control unit 3 are provided as separate components but may be integrally configured. That is, the illumination control unit 43C and the vehicle control unit 3 may be configured by a single electronic control unit.

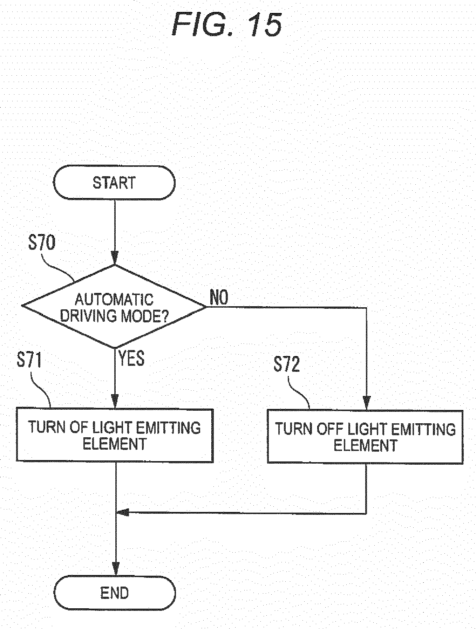

Subsequently, processing of turning on and off the light emitting elements 420 in accordance with the driving mode of the vehicle 1C is described with reference to FIG. 15. First, the vehicle control unit 3 determines whether the driving mode of the vehicle 1C is the automatic driving mode or the manual driving mode (step S70). When it is determined that the driving mode of the vehicle 1C is the automatic driving mode (YES in step S70), the vehicle control unit 3 generates a lighting signal and transmits the lighting signal to the illumination control unit 43C. Then, the illumination control unit 43C turns on the light emitting elements 420 on the basis of the received lighting signal (step S71).

On the other hand, when it is determined that the driving mode of the vehicle 1C is the manual driving mode (NO in step S70), the vehicle control unit 3 generates a lights-out signal and transmits the lights-out to the illumination control unit 43C. Then, the illumination control unit 43C turns off the light emitting elements 420 on the basis of the received lights-out signal (step S72). In this way, the series of processing is over. This processing may be repetitively executed with a predetermined cycle.

According to the fourth illustrative embodiment, the pedestrians, the other vehicles and the like around the vehicle 1C can perceive that the driving mode of the vehicle 1C is the automatic driving mode by seeing the illumination state of the light emitting elements 420 provided in the emblems 42C. In particular, the pedestrians, the other vehicles and the like can perceive whether the driving mode of the vehicle 1C is the automatic driving mode or the manual driving mode by seeing the lighting/lights-out of the light emitting elements 420.

In the example of FIG. 15, the illumination control unit 43C displays the information, which indicates that the driving mode of the vehicle 1C is the automatic driving mode, toward the outside by turning on the light emitting elements 420. However, on the contrary, the illumination control unit 43C may be configured to display the information, which indicates that the driving mode of the vehicle 1C is the automatic driving mode, toward the outside by turning off the light emitting elements 420 (in this case, the light emitting elements 420 are turned off in step S71 and the light emitting elements 420 are turned on in step S72). Also, the illumination control unit 43C may be configured to display the information, which indicates that the driving mode of the vehicle 1C is the automatic driving mode, toward the outside by setting the light emitting state of the light emitting elements 420 (an illumination color, a light emitting area, a blinking cycle, a luminescence intensity and the like) to a predetermined light emitting state.

Also, the illumination control unit 43C may be configured to set the illumination state of the light emitting elements 420 to a predetermined illumination state, in accordance with following information relating to the automatic driving.
- Information indicative of a transition state of the driving mode of the vehicle
- Information indicating that the vehicle is travelling in the full-automatic driving mode in the state where there is no passenger on the driver seat of the vehicle
- Information indicating that the vehicle is travelling in the full-automatic driving mode in the state where there is a passenger in the vehicle
- Stop Warning Information forewarning stop of the vehicle
- Information indicating that the automatic driving control of the vehicle is in an abnormal state
- Information indicating whether it is possible to get in the vehicle travelling in the full-automatic driving mode

Also, like the first illustrative embodiment, the illumination control unit 43C may be configured to change the illumination state of the light emitting elements 420 (lighting/lights-out/light emitting area/blinking cycle/luminescence intensity), based on predicted lifetimes of the light emitting elements 420. Also, the illumination control unit 43C may be configured to change the illumination state of the light emitting elements 420, based on a current condition of the driver. Also, the information relating to the automatic driving may be presented to the pedestrians, the other vehicles and the like outside the vehicle 1C by using a speaker.

### (Fifth Illustrative Embodiment)

Subsequently, a display device 4D relating to a fifth illustrative embodiment is described.

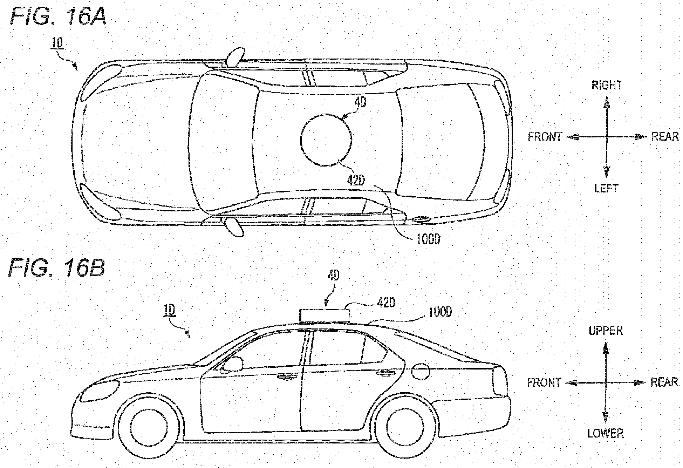

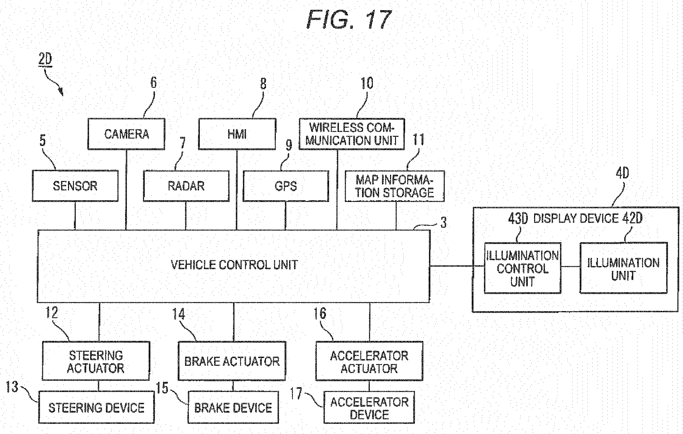

FIG. 16 depicts a vehicle 1D in which the display device 4D relating to the fifth illustrative embodiment is mounted. FIG. 16A is a plan view of the vehicle 1D, and FIG. 16B is a left side view of the vehicle 1D. The vehicle 1D is an automobile capable of travelling in the automatic driving mode and includes the display device 4D. The display device 4D is configured to display information, which indicates that the vehicle 1D is a vehicle capable of travelling in the automatic driving mode, towards an outside of the vehicle 1D, and includes an illumination unit 42D and an illumination control unit 43D (refer to FIG. 17). As shown in FIG. 16, the illumination unit 42D of the display device 4D is arranged on a vehicle body roof of the vehicle 1D and is configured to irradiate light toward an outside of the vehicle 1D over an entire circumference (360°) of the vehicle 1D in the horizontal direction. The illumination unit 42D is attached to only a vehicle that can travel in the automatic driving mode. The pedestrians, the other vehicles and the like around the vehicle 1D can perceive that the vehicle 1D is a vehicle capable of travelling in the automatic driving mode by seeing the illumination unit 42D.

Subsequently, a vehicle system 2D of the vehicle 1D is described with reference to FIG. 17. FIG. 17 is a block diagram of the vehicle system 2D.

As described above, the display device 4D includes the illumination unit 42D and the illumination control unit 43D. The illumination unit 42D includes one or more light emitting elements such as LEDs or laser and is configured to irradiate light toward the outside of the vehicle 1D. The illumination control unit 43D sets a light emitting state of the illumination unit 42D (lighting/lights-out, an illumination color, a luminescence intensity, a light emitting area, a blinking cycle, and the like) to a predetermined light emitting state when the driving mode of the vehicle 1D is the automatic driving mode.

The illumination control unit 43D may be configured to turn on or off the illumination unit 42D. Alternatively, the illumination control unit 43D may be configured to set an illumination color of the illumination unit 42D to a predetermined illumination color (for example, white, green, blue or the like). Also, the illumination control unit 43D may be configured to set a light emitting area of the illumination unit 42D to a predetermined light emitting area. Also, the illumination control unit 43D may be configured to set a blinking cycle of the illumination unit 42D to a predetermined blinking cycle T. Also, the illumination control unit 43D may be configured to set a luminescence intensity of the illumination unit 42D to a predetermined luminescence intensity 1.

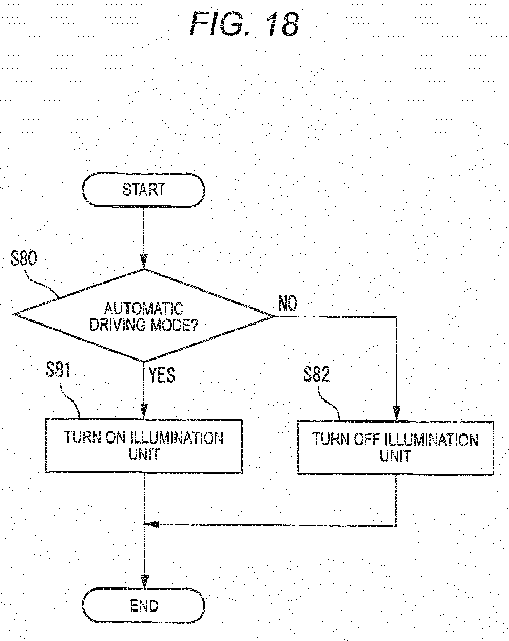

Subsequently, processing of turning on and off the illumination unit 42D in accordance with the driving mode of the vehicle 1D is described with reference to FIG. 18. First, the vehicle control unit 3 determines whether the driving mode of the vehicle 1D is the automatic driving mode or the manual driving mode (step S80). When it is determined that the driving mode of the vehicle 1D is the automatic driving mode (YES in step S80), the vehicle control unit 3 generates a lighting signal and transmits the lighting signal to the illumination control unit 43D. Then, the illumination control unit 43D turns on the illumination unit 42D on the basis of the received lighting signal (step S81).

On the other hand, when it is determined that the driving mode of the vehicle 1D is the manual driving mode (NO in step S80), the vehicle control unit 3 generates a lights-out signal and transmits the lights-out to the illumination control unit 43D. Then, the illumination control unit 43D turns off the illumination unit 42D on the basis of the received lights-out signal (step S82).

According to the fifth illustrative embodiment, the pedestrians, the other vehicles and the like around the vehicle 1D can perceive that the driving mode of the vehicle 1C is the automatic driving mode by seeing the illumination state of the illumination unit 42D. In particular, the pedestrians, the other vehicles and the like can perceive whether the driving mode of the vehicle 1C is the automatic driving mode or the manual driving mode by seeing the lighting/lights-out of the illumination unit 42D.

In the example of FIG. 18, the illumination control unit 43D displays the information, which indicates that the driving mode of the vehicle 1D is the automatic driving mode, toward the outside by turning on the illumination unit 42D. However, on the contrary, the illumination control unit 43D may be configured to display the information, which indicates that the driving mode of the vehicle 1D is the automatic driving mode, toward the outside by turning off the illumination unit 42D (in this case, the illumination unit 42D is turned off in step S81 and the illumination unit 42D is turned on in step S82). Also, the illumination control unit 43D may be configured to display the information, which indicates that the driving mode of the vehicle 1C is the automatic driving mode, toward the outside by setting the illumination state of the illumination unit 42D (an illumination color, a light emitting area, a blinking cycle, a luminescence intensity and the like) to a predetermined illumination state.

Also, the illumination control unit 43D may be configured to set the illumination state of the illumination unit 42D to a predetermined illumination state, in accordance with following information relating to the automatic driving.
- Information indicative of a transition state of the driving mode of the vehicle
- Information indicating that the vehicle is travelling in the full-automatic driving mode in the state where there is no passenger on the driver seat of the vehicle
- Information indicating that the vehicle is travelling in the full-automatic driving mode in the state where there is a passenger in the vehicle
- Stop Warning Information forewarning stop of the vehicle
- Information indicating that the automatic driving control of the vehicle is in an abnormal state
- Information indicating whether it is possible to get in the vehicle travelling in the full-automatic driving mode

Also, like the first illustrative embodiment, the illumination control unit 43D may be configured to change the illumination state of the illumination unit 42D (lighting/lights-out/light emitting area/illumination color/blinking cycle/luminescence intensity), based on a predicted lifetime of the illumination unit 42D. Also, the illumination control unit 43D may be configured to change the illumination state of the illumination unit 42D, based on a current condition of the driver. Also, the information relating to the automatic driving may be presented to the pedestrians, the other vehicles and the like outside the vehicle 1D by using a speaker.

### <First Modified Embodiment of Illumination Unit>

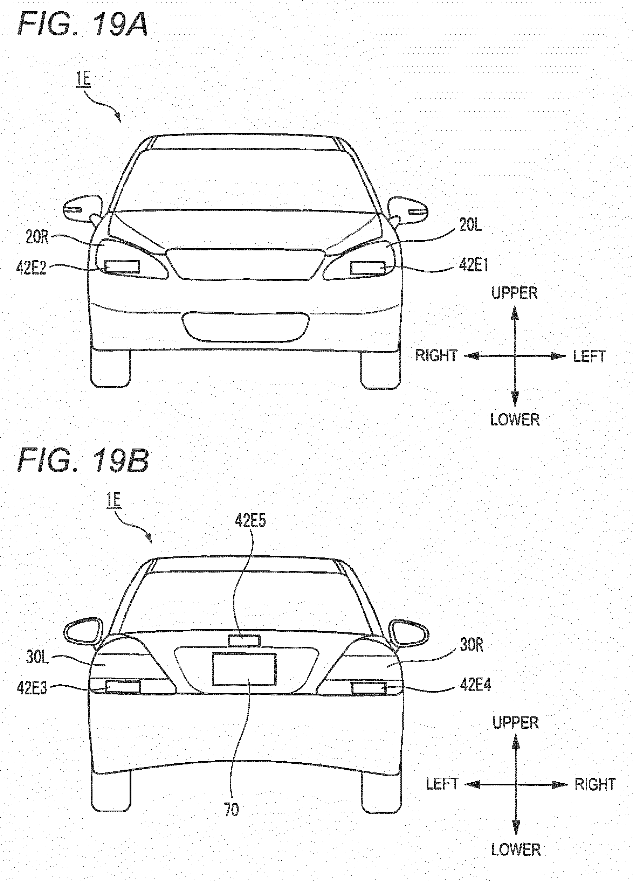

Subsequently, a first modified embodiment of the illumination unit is described with reference to FIG. 19. FIG. 19A is a front view of a vehicle 1E in which illumination units 42E1 to 42E5 are mounted, and FIG. 19B is a rear view of the vehicle 1E.

Each of the illumination units 42E1 to 42E5 includes light emitting elements such as LEDs or laser. The illumination units 42E1 to 42E4 are respectively configured to irradiate light toward an outside of the vehicle 1E, and the illumination unit 42E5 is configured to irradiate light toward a license plate 70 attached to the vehicle 1E. The illumination unit 42E1 is arranged in a left headlamp 20L, and the illumination unit 42E2 is arranged in a right headlamp 20R. The illumination unit 42E3 is arranged in a left rear combination lamp 30L, and the illumination unit 42E4 is arranged in a right rear combination lamp 30R. The illumination unit 42E5 is arranged in the vicinity of the license plate 70. The illumination units 42E1 to 42E5 can irradiate the light toward the outside of the vehicle 1E over the entire circumference of the vehicle 1E in the horizontal direction. In the meantime, instead of providing the illumination unit 42E5, a frame member configured to surround the license plate may be configured to emit light. Alternatively, the numbers displayed on the license plate 70 may be configured to emit light.

### <Second Modified Embodiment of Illumination Unit>

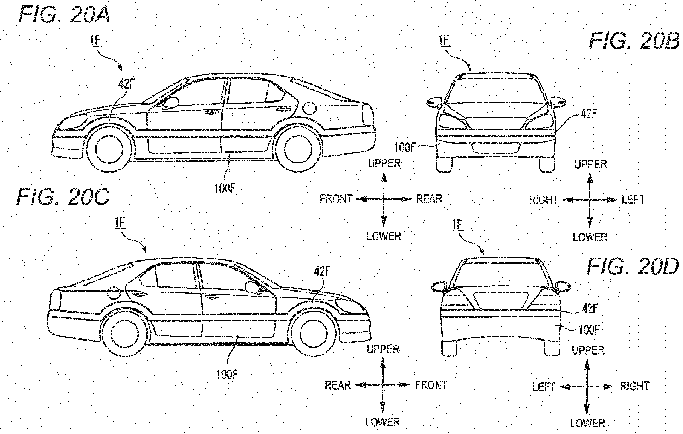

Subsequently, a second modified embodiment of the illumination unit is described with reference to FIG. 20. FIG. 20A is a left side view of a vehicle 1F in which an illumination unit 42F is mounted, FIG. 20B is a front view of the vehicle 1F, FIG. 20C is a right side view of the vehicle 1F, and FIG. 20D is a rear view of the vehicle 1F.

The illumination unit 42F is arranged on a vehicle body side surface 100F of the vehicle 1F so as to surround the vehicle body side surface 100F over an entire range in a circumferential direction. The illumination unit 42F includes a plurality of light emitting elements such as LEDs or laser provided in an extension direction thereof, and is configured to irradiate light toward an outside of the vehicle 1F. In this way, since the illumination unit 42F is arranged to surround the vehicle body side surface 100F and the plurality of light emitting elements is provided in the extension direction of the illumination unit 42F, the illumination unit 42F can irradiate the light toward the outside of the vehicle 1F over the entire circumference of the vehicle 1F in the horizontal direction. Meanwhile, in FIG. 20, the illumination unit 42F is arranged to continuously (with no break) surround the vehicle body side surface 100F. However, the illumination unit 42F may be arranged to discontinuously surround the vehicle body side surface 100F.

### <Third Modified Embodiment of Illumination Unit>

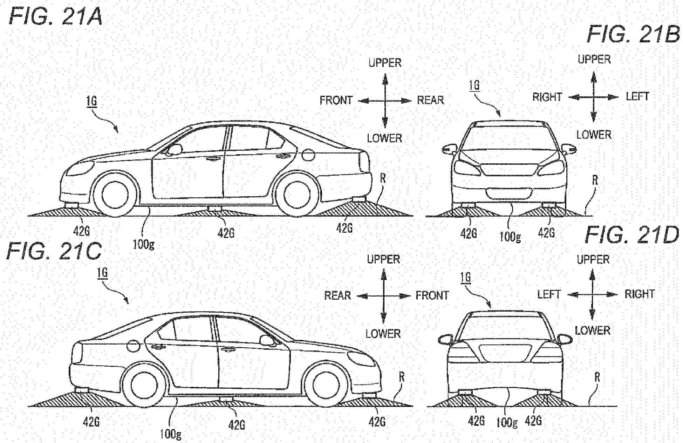

Subsequently, a third modified embodiment of the illumination unit is described with reference to FIG. 21. FIG. 21A is a left side view of a vehicle 1G in which a plurality of (here, six) illumination units 42F is mounted, FIG. 21B is a front view of the vehicle 1G, FIG. 21C is a right side view of the vehicle 1G, and FIG. 21D is a rear view of the vehicle 1G.

The respective illumination units 42G are arranged on a back surface 100g facing a road surface R, and include one or more light emitting elements such as LEDs or laser. Each of the illumination units 42G is configured to irradiate light toward the road surface R around the vehicle 1G.

Each of the illumination units 42G is configured to irradiate the light over an entire circumference of the vehicle 1G in the horizontal direction via the road surface R. That is, the light directly irradiated from the respective illumination units 42G is reflected on the road surface R, and the reflected light reflected on the road surface R is irradiated toward the outside of the vehicle 1G over the entire circumference of the vehicle 1G in the horizontal direction.

In FIG. 21, the three illumination units 42G are aligned in the front and rear direction on the left side of the vehicle 1G, and the three remaining illumination units 42G are aligned in the front and rear direction on the right side of the vehicle 1G. However, the number and arrangement of the illumination units 42G are not particularly limited. The number and arrangement of the illumination units 42G can be appropriately changed inasmuch as the illumination units 42G can irradiate the light over the entire circumference of the vehicle 1G. For example, the plurality of illumination units 42G may be arranged at an end portion (a boundary part between the vehicle body side surface and the vehicle body back surface) of the back surface 100g.

In the fourth and fifth illustrative embodiments and the first to third modified embodiments, the illumination unit includes the light emitting elements. However, an illumination unit configured to irradiate light toward the outside of the vehicle over the entire circumference of the vehicle in the horizontal direction by using an optical system, which includes a light source (not shown) arranged on a vehicle body roof, in an engine room or in a vehicle interior, a plurality of MEMS (Micro Electro Mechanical Systems) mirrors (not shown) arranged in the illumination unit and a plurality of optical fibers for optically connecting the light source and the plurality of MEMS mirrors, may be implemented

Although the illustrative embodiments of the present invention have been described, it should be noted that the technical scope of the present invention is not to be interpreted limitedly by the description of the illustrative embodiments. It will be understood by one skilled in the art that the illustrative embodiments are merely exemplary and a variety of changes to the illustrative embodiments can be made within the scope of the invention defined in the claims. The technical scope of the present invention should be determined on the basis of the scope of the invention defined in the claims and its equivalent scope

In each of the illustrative embodiments, the driving mode of the vehicle includes the full-automatic driving mode, the advanced driving support mode, the driving support mode, and the manual driving mode. However, the driving mode of the vehicle should not be limited to the four modes. The driving mode of the vehicle may include at least one of the four modes. For example, the driving mode of the vehicle may include only the full-automatic driving mode. In this case, the vehicular illumination device is configured to always display the information indicative of the full-automatic driving mode toward the outside of the vehicle. On the other hand, the driving mode of the vehicle may include only the manual driving mode. In this case, the vehicular illumination device is configured to always display the information indicative of the manual driving mode toward the outside of the vehicle

Also, the classification and display form of the driving mode of the vehicle may be appropriately changed in accordance with the laws and regulations pertaining to the automatic driving in each country. Likewise, the definitions of "the full-automatic driving mode," "the advanced driving support mode," and "the driving support mode" described in the illustrative embodiments are merely examples, and the definitions may be appropriately changed in accordance with the laws and regulations pertaining to the automatic driving in each country.

Also, in each illustrative embodiment, the illumination control unit may be configured to set the illumination state of the illumination unit (lighting/lights-out/light emitting area/illumination color/blinking cycle/luminescence intensity) to a predetermined illumination state, in accordance with following information.
- Information indicative of abnormality of a component (brake, tire, and the like) of the vehicle
- Information indicating whether the vehicle is connected to a communication network
- Information indicative of abnormality of a camera, a radar, and the like
- Information indicative of abnormality in a passenger's vital sign
- Information indicative of a capacity of a battery mounted on the vehicle

The present application is based on Japanese Patent Application No. 2015-211214 filed on October 27, 2015, Japanese Patent Application No. 2015-211215 filed on October 27, 2015, Japanese Patent Application No. 2015-211216 filed on October 27, 2015, and Japanese Patent Application No. 2015-211217 filed on October 27, 2015, the contents of which are appropriately incorporated herein.

## Claims

1. A vehicular illumination device configured to display information indicative of a driving mode of a vehicle toward an outside of the vehicle capable of travelling in an automatic driving mode, the vehicular illumination device comprising:
an illumination unit configured to irradiate light toward the outside of the vehicle, and
an illumination control unit configured to set an illumination state of the illumination unit to a predetermined illumination state in accordance with the driving mode of the vehicle.

2. The vehicular illumination device according to claim 1, wherein the illumination control unit turns on or off the illumination unit when the driving mode of the vehicle is a predetermined driving mode.

3. The vehicular illumination device according to claim 2, wherein the illumination control unit turns on or off the illumination unit when the driving mode of the vehicle is a full-automatic driving mode.

4. The vehicular illumination device according to claim 2, wherein the illumination control unit turns on or off the illumination unit when the driving mode of the vehicle is a full-automatic driving mode or an advanced driving support mode.

5. The vehicular illumination device according to claim 2, wherein the illumination control unit turns on or off the illumination unit when the driving mode of the vehicle is a full-automatic driving mode, an advanced driving support mode or a driving support mode.

6. The vehicular illumination device according to claim 1, wherein the illumination control unit sets the illumination state of the illumination unit to a first illumination state when the driving mode of the vehicle is a full-automatic driving mode,
wherein the illumination control unit sets the illumination state of the illumination unit to a second illumination state when the driving mode of the vehicle is an advanced driving support mode,
wherein the illumination control unit sets the illumination state of the illumination unit to a third illumination state when the driving mode of the vehicle is a driving support mode, and
wherein the illumination control unit sets the illumination state of the illumination unit to a fourth illumination state when the driving mode of the vehicle is a manual driving mode.

7. The vehicular illumination device according to claim 1 or 6, wherein the illumination control unit is configured to change an illumination color, a luminescence intensity, a light emitting area or a blinking cycle of the illumination unit in accordance with the driving mode of the vehicle.

8. A vehicle system comprising:
the vehicular illumination device according to one of claims 1 to 7, and
a vehicle control unit configured to transmit a mode signal indicative of the driving mode of the vehicle to the vehicular illumination device and to control traveling of the vehicle.

9. A vehicular illumination device configured to display information, which indicates that a vehicle is travelling in a full-automatic driving mode in a state where there is no passenger on a driver seat of the vehicle, toward an outside of the vehicle capable of travelling in the full-automatic driving mode, the vehicular illumination device comprising:
an illumination unit configured to irradiate light to an outside of the vehicle, and
an illumination control unit configured to set an illumination state of the illumination unit to a predetermined illumination state when a driving mode of the vehicle is the full-automatic driving mode and there is no passenger on the driver seat of the vehicle.

10. The vehicular illumination device according to claim 9, wherein the illumination control unit turns on or off the illumination unit when the driving mode of the vehicle is the full-automatic driving mode and there is no passenger on the driver seat of the vehicle.

11. A vehicle system comprising:
the vehicular illumination device according to claim 9, and
a vehicle control unit configured to transmit a predetermined control signal to the vehicular illumination device when a driving mode of the vehicle is the full-automatic driving mode and there is no passenger on the driver seat of the vehicle,
wherein the illumination control unit is configured to set the illumination state of the illumination unit to the predetermined illumination state on the basis of the predetermined illumination control signal.

12. A vehicular illumination device configured to display information, which indicates that a vehicle is travelling in a full-automatic driving mode in a state where there is a passenger in the vehicle, toward an outside of the vehicle capable of travelling in the full-automatic driving mode, the vehicular illumination device comprising:
an illumination unit configured to irradiate light to an outside of the vehicle, and
an illumination control unit configured to set an illumination state of the illumination unit to a predetermined illumination state when a driving mode of the vehicle is the full-automatic driving mode and there is a passenger in the vehicle.

13. The vehicular illumination device according to claim 12, wherein the illumination control unit turns on or off the illumination unit when the driving mode of the vehicle is the full-automatic driving mode and there is a passenger in the vehicle.

14. A vehicle system comprising:
the vehicular illumination device according to claim 12, and
a vehicle control unit configured to transmit a predetermined control signal to the vehicular illumination device when a driving mode of the vehicle is the full-automatic driving mode and there is a passenger in the vehicle,
wherein the illumination control unit is configured to set the illumination state of the illumination unit to the predetermined illumination state on the basis of the predetermined illumination control signal.

15. A vehicular display device configured to display information, which indicates that a vehicle is a vehicle capable of travelling in an automatic driving mode, toward an outside of the vehicle.

16. The vehicular display device according to claim 15, wherein the vehicular display device comprises an emblem attached to a vehicle body of the vehicle.

17. The vehicular display device according to claim 15, wherein the vehicular display device comprises an illumination unit configured to irradiate light toward an outside of the vehicle.

18. The vehicular display device according to claim 16, wherein the emblem comprises a light emitting element, and
wherein the vehicular display device further comprises an illumination control unit configured to set a light emitting state of the light emitting element to a predetermined light emitting state when a driving mode of the vehicle is the automatic driving mode.

19. The vehicular display device according to claim 17, further comprising an illumination control unit configured to set an illumination state of the illumination unit to a predetermined illumination state when a driving mode of the vehicle is the automatic driving mode.

20. The vehicular display device according to claim 18, wherein the illumination control unit turns on or off the light emitting element when the driving mode of the vehicle is the automatic driving mode

21. The vehicular display device according to claim 19, wherein the illumination control unit turns on or off the illumination unit when the driving mode of the vehicle is the automatic driving mode.

22. A vehicle comprising the vehicle system according to one of claims 8, 11 and 14 and capable of travelling in an automatic driving mode.
